(19) Europäisches Patentamt
European Patent Office
Office européen des brevets

(11) **EP 4 343 385 B1**

(12) **EUROPEAN PATENT SPECIFICATION**

(45) Date of publication and mention
of the grant of the patent:
**20.08.2025 Bulletin 2025/34**

(21) Application number: **21946946.7**

(22) Date of filing: **21.06.2021**

(51) International Patent Classification (IPC):
**G01S 17/58** (2006.01)      **G01S 17/95** (2006.01)
**G01S 7/48** (2006.01)       **G01W 1/10** (2006.01)
**G01S 17/42** (2006.01)

(52) Cooperative Patent Classification (CPC):
**G01S 17/95; G01S 7/4808; G01S 17/58;**
**G01W 1/10;** G01S 17/42; Y02A 90/10

(86) International application number:
**PCT/JP2021/023291**

(87) International publication number:
**WO 2022/269655 (29.12.2022 Gazette 2022/52)**

(54) **WIND SPEED PREDICTION DEVICE, WIND SPEED PREDICTION METHOD, AND RADAR DEVICE**

WINDGESCHWINDIGKEITSVORHERSAGEVORRICHTUNG,
WINDGESCHWINDIGKEITSVORHERSAGEVERFAHREN UND RADARVORRICHTUNG

DISPOSITIF DE PRÉDICTION DE VITESSE DE VENT, PROCÉDÉ DE PRÉDICTION DE VITESSE
DE VENT ET DISPOSITIF RADAR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**27.03.2024 Bulletin 2024/13**

(73) Proprietor: **MITSUBISHI ELECTRIC**
**CORPORATION**
**Chiyoda-ku**
**Tokyo 100-8310 (JP)**

(72) Inventors:
• **KITAMURA, Takayuki**
**Tokyo 100-8310 (JP)**
• **SUWA, Kei**
**Tokyo 100-8310 (JP)**
• **KAMEYAMA, Shumpei**
**Tokyo 100-8310 (JP)**
• **SAKAMAKI, Hiroshi**
**Tokyo 100-8310 (JP)**
• **IMAKI, Masaharu**
**Tokyo 100-8310 (JP)**

(74) Representative: **Mewburn Ellis LLP**
**Aurora Building**
**Counterslip**
**Bristol BS1 6BX (GB)**

(56) References cited:
WO-A1-2021/079513      JP-A- 2000 009 857
JP-A- 2014 506 327      JP-A- 2021 043 105
JP-A- 2021 509 718      US-A- 5 724 125
US-A1- 2013 282 285

• WALDTEUFEL P ET AL: "On the Analysis of
Single-Doppler Radar Data", JOURNAL OF
APPLIED METEOROLOGY AND CLIMATOLOGY,
1 April 1979 (1979-04-01), pages 532 - 542,
XP093171238, Retrieved from the Internet
<URL:https://journals.ametsoc.org/
downloadpdf/view/journals/apme/18/4/
1520-0450_1979_018_0532_otaosd_2_0_co_2.
pdf> [retrieved on 20240606], DOI: https://doi.
org/10.1175/1520-0450(1979)018%3C0532:
OTAOSD%3E2.0.CO;2

**(Cont. next page)**

- **SOICHIRO SUGIMOTO ET AL: "A rainfall prediction method using a meteorological radar: Estimation of horizontal wind and its divergence fields using Doppler radar data", REPORT OF THE CENTRAL RESEARCH INSTITUTE OF THE ELECTRIC POWER INDUSTRY (REPORT OF THE CENTRAL RESEARCH INSTITUTE OF THE ELECTRIC POWER INDUSTRY), 1 April 2001 (2001-04-01), pages 1 - 29, XP093171258, Retrieved from the Internet <URL:https://www. denken.or.jp/hokokusho/pb/reportDetail? reportNoUkCode=U00051> [retrieved on 20240606]**

- **SUGIMOTO, S. TOYODA ET AL.: "A rainfall prediction method using a meteorological radar: Estimation of horizontal wind and its divergence fields using Doppler radar data", CENTRAL RESEARCH INSTITUTE OF ELECTRIC POWER INDUSTRY RESEARCH REPORT, April 2001 (2001-04-01), pages 1 - 29**
- **KITAMURA, TAKAYUKI ET AL.: "Incoming wind velocity estimation using Doppler LIDAR", IEICE TECHNICAL REPORT, vol. 119, no. 416, 12 February 2020 (2020-02-12), pages 25 - 30, ISSN: 2432- 6380**

**EP 4 343 385 B1**

**Description**

TECHNICAL FIELD

The present disclosure relates to a wind speed prediction device, and a wind speed prediction method.

BACKGROUND ART

Some wind speed prediction devices that predict a wind speed in an observation region include a wind speed prediction device (hereinafter referred to as a "conventional wind speed prediction device") that predicts a wind speed in an observation region by simulating the wind speed using a weather model (see Patent Literature 1). The simulation of the wind speed is three-dimensional calculation processing.

Patent Literature 2 discloses a method for determining the flow of a fluid in a volume of interest, including steps of remotely measuring, at a plurality of measurement points distributed along at least three axes having different spatial orientations passing through the volume of interest, the radial velocity of the fluid in the vicinity of the measurement points, and for calculating the velocity of the fluid at a plurality of calculation points distributed in a grid in the volume of interest, wherein the calculation of the velocity of the fluid includes the use of a mechanical behavior model of the fluid.

Non-Patent Literature 1 briefly reviews procedures employed to retrieve vector wind information from single-Doppler radar observations. In particular, those procedures implying a linearity hypothesis for the wind field are shown to be particular cases of a method termed VVP (Volume Velocity Processing). This method, which makes full use of radar velocity data filling a volume, is first tested on simulated observations in order to assess its accuracy, then applied to actual data and shown to yield unbiased parameters of the horizontal vector wind field, as well as an estimate of the hydrometeor fall velocity and several control parameters.

In Non-Patent Literature 2, first, a Doppler velocity dealiasing technique is developed for difficult aliasing problems. A dealiasing algorithm is described that automatically processes one radial at a time by comparing the radial with a previous or surrounding radial. This technique has worked reliably on numerous Doppler radar datasets for severe storm environments observed by an X-band Doppler radar. Second, an analysis technique for the retrieval of the mesoscale (20 -100 km) wind field, such as the VVP ( Volume Velocity Processing ), is extended. This extended VVP analysis has adaptability for a nonlinear wind field better than the original method. This algorithm can compute both estimates and residual variances simultaneously for several analysis volumes, and select the optimal horizontal wind and its divergence which minimizes the residual variance. The horizontal wind field estimated has a larger scale of the observation resolution and this estimate aids in tracking the entire movement of rainfall distribution.

Patent Literature 3 discloses a system and method for determining wind velocity. The LIDAR 104 transmits a plurality of laser pulses. The paths of the laser pulses surround a center line that does not coincide with a vertical axis intersecting the LIDAR , i.e., an off-vertical scan. Each laser pulse reflects off particles in the air at a given location. This location is the intersection of the path of each LIDAR pulse and the target altitude. The target altitude is the altitude at which the wind velocity is to be determined. The reflected pulses are received by the LIDAR. The invention groups the received LIDAR pulses according to the altitude at which they were reflected, as opposed to the distance each pulse travels. Grouping the received pulses in this manner enables the invention to perform an off-vertical scan that accurately determines the wind velocity at a target altitude. The received laser pulses have an associated Doppler shift. The Doppler shift is a measure of the relative radial wind velocity at the target location. The invention measures the Doppler shift from a plurality of received laser pulses reflected from the target altitude. These measurements enable the invention to determine the wind velocity at the target location.

CITATION LIST

PATENT LITERATURES AND NON-PATENT LITERATURES

Patent Literature 1: Japanese Patent Application Laid-Open No. 2014-202190
Patent Literature 2: US 2013/282285 A1
Patent Literature 3: US 5 724 125 A
Non-Patent Literature 1: Waldteufel PET AL: "On the Analysis of Single-Doppler Radar Data", Journal of Applied Meteorology and Climatology, 1 April 1979 (1979-04-01), pages 5382-542, XP093171238, DOI: https://doi.org/
No-Patent Literature 2: Soichiro Sugimoto ET AL: "A rainfall prediction method using a meteorological radar: Estimation of horizontal wind and its divergence fields using Doppler radar data", Report of the Central Research Institute of the Electric Power Industry (Report of the Central Research Institute of the Electric Power Industry), 1 April 2001 (2001-04-01), pages 1-29, XP093171258,

## SUMMARY OF INVENTION

### TECHNICAL PROBLEM

The conventional wind speed prediction device disclosed in Patent Literature 1 performs three-dimensional calculation processing, and thus has a problem that a calculation load may increase.

The present disclosure has been made to solve the above problems, and an object thereof is to obtain a wind speed prediction device and a wind speed prediction method capable of predicting a wind speed without performing three-dimensional calculation processing.

### SOLUTION TO PROBLEM

A wind speed prediction device according to the present disclosure is set forth in claim 1. A wind speed prediction method according to the present disclosure is set forth in claim 6.

### ADVANTAGEOUS EFFECTS OF INVENTION

According to the present disclosure, a wind speed can be predicted without performing three-dimensional calculation processing.

### BRIEF DESCRIPTION OF DRAWINGS

FIG. 1 is a configuration diagram illustrating a radar device 1 including a wind speed prediction device 3 according to a first embodiment.

FIG. 2A is an explanatory diagram illustrating a plurality of beams in a case where the position of a flight area is directly above a beam transmitting and receiving unit 2 in a vertical direction, and FIG. 2B is an explanatory diagram illustrating a plurality of beams in a case where the position of the flight area is deviated from directly above the beam transmitting and receiving unit 2 in the vertical direction.

FIG. 3 is a configuration diagram illustrating a wind speed prediction device 3 according to the first embodiment.

FIG. 4 is a hardware configuration diagram illustrating hardware of the wind speed prediction device 3 according to the first embodiment.

FIG. 5 is a hardware configuration diagram of a computer in a case where the wind speed prediction device 3 is implemented by software, firmware, or the like.

FIG. 6 is a flowchart illustrating a wind speed prediction method which is a processing procedure performed by the wind speed prediction device 3.

FIG. 7A is an explanatory diagram illustrating that altitudes of a plurality of observation points of the same range bin $Rb_m$ are different from each other when an elevation angle $\theta_n$ is different, and FIG. 7B is an explanatory diagram illustrating that a plurality of observation points of the same range bin $Rb_m$ are at the same altitude even when the elevation angle $\theta_n$ is changed.

FIG. 8 is an explanatory diagram illustrating positions (x, y, z) of observation points of the wind speed.

FIG. 9 is a configuration diagram illustrating a wind speed prediction device 3 according to a second embodiment.

FIG. 10 is a hardware configuration diagram illustrating hardware of the wind speed prediction device 3 according to the second embodiment.

FIG. 11 is a configuration diagram illustrating a wind speed prediction device 3 according to a third embodiment.

FIG. 12 is a hardware configuration diagram illustrating hardware of the wind speed prediction device 3 according to the third embodiment.

### DESCRIPTION OF EMBODIMENTS

Hereinafter, in order to describe the present disclosure in more detail, modes for carrying out the present disclosure will be described with reference to the accompanying drawings.

First Embodiment

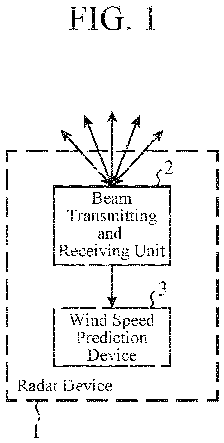

FIG. 1 is a configuration diagram illustrating a radar device 1 including a wind speed prediction device 3 according to a first embodiment.

The radar device 1 illustrated in FIG. 1 includes a beam transmitting and receiving unit 2 and a wind speed prediction device 3.

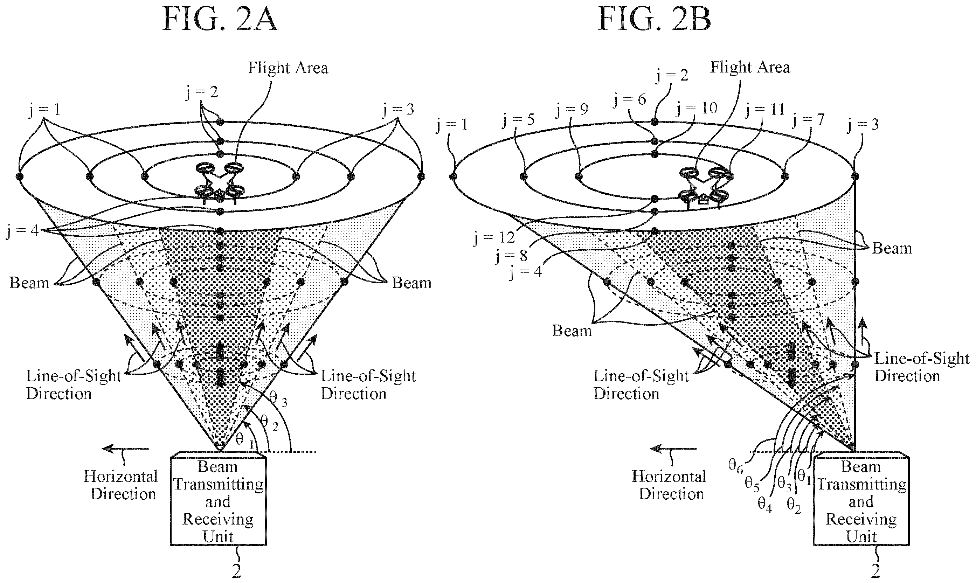

FIG. 2 is an explanatory diagram illustrating a plurality of beams emitted to space from the beam transmitting and receiving unit 2. In the example of FIG. 2, the observation region is present in the space. The observation region is, for example, a flight area in which a flying object is scheduled to fly. The flying object is, for example, a drone or a helicopter.

FIG. 2A is an explanatory diagram illustrating a plurality of beams in a case where the position of the flight area is directly above the beam transmitting and receiving unit 2 in the vertical direction.

FIG. 2B is an explanatory diagram illustrating a plurality of beams in a case where the position of the flight area is deviated from directly above the beam transmitting and receiving unit 2 in the vertical direction.

The beam transmitting and receiving unit 2 includes, for example, a beam generating unit, a beam transmitter, a radiation direction switching unit, an antenna, and a beam receiver. In FIG. 1, notations of the beam generating unit, the beam transmitter, the radiation direction switching unit, the antenna, and the beam receiver are omitted.

As illustrated in FIG. 2, the beam transmitting and receiving unit 2 emits each of a plurality of beams having mutually different elevation angles $\theta_n$ (n = 1, ..., N), which are angles formed by the line-of-sight direction and the horizontal direction, into space. N is an integer of 2 or more.

That is, as illustrated in FIG. 2A, when the flight area is present directly above in the vertical direction, the beam transmitting and receiving unit 2 emits beams in different directions at respective elevation angles $\theta_n$ by performing beam scanning at the respective elevation angles $\theta_n$.

In FIG. 2A, N = 3, and each of the beam with the elevation angle $\theta_1$, the beam with the elevation angle $\theta_2$, and the beam with the elevation angle $\theta_3$ is emitted from the beam transmitting and receiving unit 2 to space. In FIG. 2A, beams are emitted in four directions at the respective elevation angles $\theta_n$. In FIG. 2A, black circles indicate observation points of the wind speed.

Further, as illustrated in FIG. 2B, when the position of the flight area is deviated from directly above in the vertical direction, the beam transmitting and receiving unit 2 emits beams at respective elevation angles $\theta_n$ while switching the elevation angles $\theta_n$.

In FIG. 2B, N = 12, and beams of elevation angles $\theta_1$ to $\theta_{12}$ are emitted from the beam transmitting and receiving unit 2 to space. For simplification of the drawing, only the elevation angles $\theta_1$ to $\theta_6$ are illustrated in FIG. 2B, and the illustration of the elevation angles $\theta_7$ to $\theta_{12}$ is omitted. In FIG. 2B, a beam is emitted in one direction at each elevation angle $\theta_n$. In FIG. 2B, black circles indicate observation points of the wind speed.

Each of FIGS. 2A and 2B illustrates an example of obtaining wind speed distributions in three two-dimensional planes. However, this is merely an example, and wind speed distributions in one or two two-dimensional planes may be obtained, or wind speed distributions in four or more two-dimensional planes may be obtained.

As the beam emitted from the beam transmitting and receiving unit 2, for example, in addition to continuous wave (CW) pulsed light, frequency-modulated pulsed light can be used.

The beam transmitting and receiving unit 2 receives each beam scattered in space as a scattering signal.

The beam transmitting and receiving unit 2 converts each scattering signal from an analog signal to a digital signal, and outputs the digital signal to the wind speed prediction device 3.

Further, the beam transmitting and receiving unit 2 outputs angle information indicating the elevation angle $\theta_n$ of each beam emitted to space to the wind speed prediction device 3.

In the radar device 1 illustrated in FIG. 1, it is assumed that the beam transmitting and receiving unit 2 includes a beam generating unit, a beam transmitter, a radiation direction switching unit, an antenna, and a beam receiver. However, the beam transmitting and receiving unit 2 is only required to emit each of a plurality of beams having different elevation angles $\theta_n$ into space and receive each beam scattered in the space as a scattering signal, and may have any configuration.

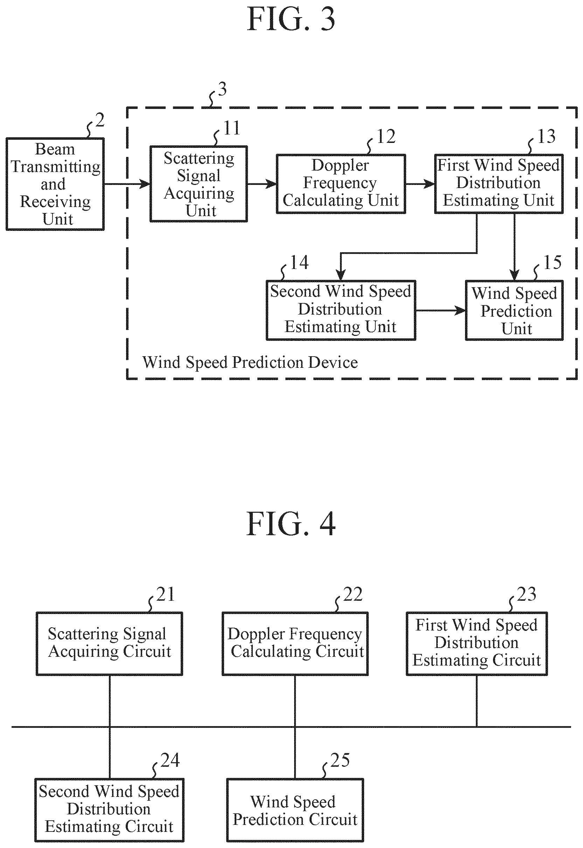

FIG. 3 is a configuration diagram illustrating the wind speed prediction device 3 according to the first embodiment.

FIG. 4 is a hardware configuration diagram illustrating hardware of the wind speed prediction device 3 according to the first embodiment.

The wind speed prediction device 3 illustrated in FIG. 3 includes a scattering signal acquiring unit 11, a Doppler frequency calculating unit 12, a first wind speed distribution estimating unit 13, a second wind speed distribution estimating unit 14, and a wind speed prediction unit 15.

The scattering signal acquiring unit 11 is implemented by, for example, a scattering signal acquiring circuit 21 illustrated in FIG. 4.

The scattering signal acquiring unit 11 acquires each of digital signals $s_{\theta n,j}(t)$ from the beam transmitting and receiving unit 2 as each of scattering signals after being scattered in space. j = 1, ..., J. j is the scan number of beam scanning at the elevation angle $\theta_n$. In the example of FIG. 2A, since beams are emitted in four directions at each elevation

angle $\theta_n$, J = 4. In the example of FIG. 2B, since the beam is emitted in one direction at each elevation angle $\theta_n$, J = 1. t is a variable indicating time.

Further, the scattering signal acquiring unit 11 acquires the angle information indicating the elevation angle $\theta_n$ of each beam emitted into space by the beam transmitting and receiving unit 2.

The scattering signal acquiring unit 11 outputs each of the digital signals $s_{\theta n,j}(t)$ and the angle information to the Doppler frequency calculating unit 12.

The Doppler frequency calculating unit 12 is implemented by, for example, a Doppler frequency calculating circuit 22 illustrated in FIG. 4.

The Doppler frequency calculating unit 12 acquires each of the digital signals $s_{\theta n,j}(t)$ and the angle information from the scattering signal acquiring unit 11.

Before performing fast Fourier transformation (FFT) on each digital signal $s_{\theta n,j}(t)$ in the hit direction, the Doppler frequency calculating unit 12 sets a range bin width as the distance resolution of each digital signal $s_{\theta n,j}(t)$ according to the elevation angle $\theta_n$ indicated by the angle information. That is, the Doppler frequency calculating unit 12 sets an FFT length $L_{\theta n}$ corresponding to the range bin width.

The FFT length $L_{\theta n}$ is set shorter as the elevation angle $\theta_n$ of the beam emitted to space is wider, and is set longer as the elevation angle $\theta_n$ of the beam emitted to the space is narrower.

In the example of FIG. 2A, the FFT length $L_{\theta 1}$ of the digital signal $s_{\theta 1,j}(t)$ corresponding to the beam at the elevation angle $\theta_1$ is longer than the FFT length $L_{\theta 2}$ of the digital signal $s_{\theta 2,j}(t)$ corresponding to the beam at the elevation angle $\theta_2$, and the FFT length $L_{\theta 2}$ of the digital signal $s_{\theta 2}(t)$ corresponding to the beam at the elevation angle $\theta_2$ is longer than the FFT length $L_{\theta 3}$ of the digital signal $s_{\theta 3,j}(t)$ corresponding to the beam at the elevation angle $\theta_3$.

The Doppler frequency calculating unit 12 converts each of the digital signals $s_{\theta n,j}(t)$ into frequency domain signals $r_{\theta n,j}(f)$ by performing FFT on the digital signals $s_{\theta n,j}(t)$ acquired by the scattering signal acquiring unit 11 in the hit direction. f is a variable indicating a frequency.

The Doppler frequency calculating unit 12 calculates the respective Doppler frequencies $dpf_{\theta n,j,Rbm}$ in a plurality of range bins $Rb_1$ to $Rb_M$ from the signals $r_{\theta n,j}(f)$ in the frequency domain. m = 1, ..., M, and M is an integer of 1 or more.

FIG. 2 illustrates an example of obtaining wind speed distributions in three two-dimensional planes. As illustrated in FIG. 2, in a case of obtaining wind speed distributions in three two-dimensional planes, the Doppler frequency calculating unit 12 calculates the Doppler frequencies $dpf_{\theta n,j,Rbm}$ in the range bins $Rb_1$, $Rb_2$, and $Rb_3$ from the signals $r_{\theta n,j}(f)$ in the frequency domain.

In the wind speed prediction device 3 illustrated in FIG. 3, it is assumed that M is an integer of 2 or more. Here, M is not limited to an integer of 2 or more, and M = 1 may be set.

When M = 1, the Doppler frequency calculating unit 12 calculates only the Doppler frequency $dpf_{\theta n,j,Rb1}$ of one range bin $Rb_1$ including the observation region from the frequency domain signal $r_{\theta n,j}(f)$.

The Doppler frequency calculating unit 12 outputs the Doppler frequencies $dpf_{\theta n,j,Rbm}$ of the respective range bins $Rb_m$ to the first wind speed distribution estimating unit 13.

The first wind speed distribution estimating unit 13 is implemented by, for example, a first wind speed distribution estimating circuit 23 illustrated in FIG. 4.

The first wind speed distribution estimating unit 13 estimates a wind speed distribution $u_{Rbm}(x, y)$ in a two-dimensional plane corresponding to each range bin $Rb_m$ using a volume velocity processing (VVP) method from a plurality of Doppler frequencies $dpf_{\theta 1,j,Rbm}$ to $dpf_{\theta N,j,Rbm}$ in each range bin $Rb_m$ calculated by the Doppler frequency calculating unit 12.

When M is 1, the first wind speed distribution estimating unit 13 estimates the wind speed distribution $u_{Rb1}(x, y)$ in the two-dimensional plane corresponding to the range bin $Rb_1$ as the two-dimensional plane including the observation region, and outputs the wind speed distribution $u_{Rb1}(x, y)$ in the two-dimensional plane to the wind speed prediction unit 15.

When M is 2 or more, the first wind speed distribution estimating unit 13 outputs the wind speed distribution $u_{Rbm}(x, y)$ in the two-dimensional plane corresponding to each range bin $Rb_m$ to the second wind speed distribution estimating unit 14.

The second wind speed distribution estimating unit 14 is implemented by, for example, a second wind speed distribution estimating circuit 24 illustrated in FIG. 4.

The second wind speed distribution estimating unit 14 estimates a wind speed distribution $u_{Rbm'}(x, y)$ in a two-dimensional plane between a plurality of two-dimensional planes from the wind speed distributions $u_{Rb1}(x, y)$ to $u_{RbM}(x, y)$ in the plurality of two-dimensional planes estimated by the first wind speed distribution estimating unit 13. For example, the wind speed distribution $u_{Rb1'}(x, y)$ in the two-dimensional plane is a wind speed distribution in the two-dimensional plane between the two-dimensional plane corresponding to the range bin $Rb_1$ and the two-dimensional plane corresponding to the range bin $Rb_2$. The wind speed distribution $u_{Rb2'}(x, y)$ in the two-dimensional plane is a wind speed distribution in the two-dimensional plane between the two-dimensional plane corresponding to the range bin $Rb_2$ and the two-dimensional plane corresponding to the range bin $Rb_3$.

The second wind speed distribution estimating unit 14 outputs the wind speed distributions $u_{Rb1'}(x, y)$ to

$u_{RbM-1'}(x, y)$ in the two-dimensional plane between the plurality of two-dimensional planes to the wind speed prediction unit 15.

The wind speed prediction unit 15 is implemented by, for example, a wind speed prediction circuit 25 illustrated in FIG. 4.

When M is 1, the wind speed prediction unit 15 predicts a wind speed $u(t)$ in the observation region from the wind speed distribution $u_{Rb1}(x, y)$ in the two-dimensional plane estimated by the first wind speed distribution estimating unit 13 using the two-dimensional Navier-Stokes equation (hereinafter referred to as a "two-dimensional N-S equation"). The observation region is, for example, an area including a flight area in which the flying object is scheduled to fly.

When M is 2 or more, the wind speed prediction unit 15 selects the wind speed distribution in the two-dimensional plane including the flight area as the observation region from the wind speed distributions $u_{Rb1}(x, y)$ to $u_{RbM}(x, y)$ in the plurality of two-dimensional planes estimated by the first wind speed distribution estimating unit 13 and the wind speed distributions $u_{Rb1'}(x, y)$ to $u_{RbM-1'}(x, y)$ in the two-dimensional plane estimated by the second wind speed distribution estimating unit 14.

The wind speed prediction unit 15 predicts the wind speed $u(t)$ in the flight area from the wind speed distribution in the selected two-dimensional plane using the two-dimensional N-S equation.

In FIG. 3, it is assumed that each of the scattering signal acquiring unit 11, the Doppler frequency calculating unit 12, the first wind speed distribution estimating unit 13, the second wind speed distribution estimating unit 14, and the wind speed prediction unit 15, which are components of the wind speed prediction device 3, is implemented by dedicated hardware as illustrated in FIG. 4. That is, it is assumed that the wind speed prediction device 3 is implemented by the scattering signal acquiring circuit 21, the Doppler frequency calculating circuit 22, the first wind speed distribution estimating circuit 23, the second wind speed distribution estimating circuit 24, and the wind speed prediction circuit 25.

Each of the scattering signal acquiring circuit 21, the Doppler frequency calculating circuit 22, the first wind speed distribution estimating circuit 23, the second wind speed distribution estimating circuit 24, and the wind speed prediction circuit 25 corresponds to, for example, a single circuit, a composite circuit, a programmed processor, a parallel-programmed processor, an application specific integrated circuit (ASIC), a field-programmable gate array (FPGA), or a combination thereof.

The components of the wind speed prediction device 3 are not limited to those implemented by dedicated hardware, and the wind speed prediction device 3 may be implemented by software, firmware, or a combination of software and firmware.

Software or firmware is stored in a memory of the computer as a program. The computer means hardware that executes a program, and corresponds to, for example, a central processing unit (CPU), a central processing device, a processing device, an arithmetic device, a microprocessor, a microcomputer, a processor, or a digital signal processor (DSP).

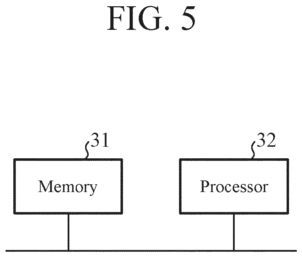

FIG. 5 is a hardware configuration diagram of a computer in a case where the wind speed prediction device 3 is implemented by software, firmware, or the like.

In a case where the wind speed prediction device 3 is implemented by software, firmware, or the like, a program for causing a computer to execute each processing procedure performed in the scattering signal acquiring unit 11, the Doppler frequency calculating unit 12, the first wind speed distribution estimating unit 13, the second wind speed distribution estimating unit 14, and the wind speed prediction unit 15 is stored in a memory 31. Then, a processor 32 of the computer executes the program stored in the memory 31.

Further, FIG. 4 illustrates an example in which each of the components of the wind speed prediction device 3 is implemented by dedicated hardware, and FIG. 5 illustrates an example in which the wind speed prediction device 3 is implemented by software, firmware, or the like. However, this is merely an example, and some components in the wind speed prediction device 3 may be implemented by dedicated hardware, and the remaining components may be implemented by software, firmware, or the like.

Next, the operation of the radar device 1 illustrated in FIG. 1 will be described.

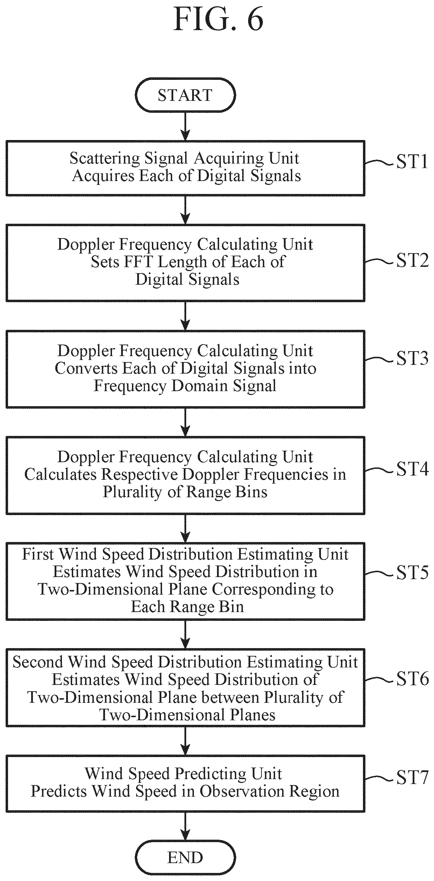

FIG. 6 is a flowchart illustrating a wind speed prediction method which is a processing procedure performed by the wind speed prediction device 3.

As illustrated in FIG. 2, the beam transmitting and receiving unit 2 emits each of a plurality of beams having different elevation angles $\theta_n$ ($n = 1, ..., N$) to space.

That is, as illustrated in FIG. 2A, when the flight area is present directly above in the vertical direction, the beam transmitting and receiving unit 2 emits beams in different directions at respective elevation angles $\theta_n$ by performing beam scanning at the respective elevation angles $\theta_n$.

As illustrated in FIG. 2B, when the position of the flight area is deviated from directly above in the vertical direction, the beam transmitting and receiving unit 2 emits beams at respective elevation angles $\theta_n$ while switching the elevation angles $\theta_n$. The beam emitted from the beam transmitting and receiving unit 2 is, for example, pulsed light.

Each beam emitted from the beam transmitting and receiving unit 2 is backscattered by fine particles such as aerosol floating in space. For example, when a plurality of fine particles is present in the line-of-sight direction of one beam, one beam is backscattered by each fine particle. The backscattered beam returns to the beam transmitting and receiving unit 2 as a scattering signal. Since the distances from the beam transmitting and receiving unit 2 to the plurality of fine particles are different from each other, the times at which the respective scattering signals return to the beam transmitting and receiving unit 2 are different from each other.

The beam transmitting and receiving unit 2 converts each scattering signal from an analog signal into a digital signal $s_{\theta n,j}(t)$ (n = 1, ..., N: j = 1, ..., J), and outputs the digital signal $s_{\theta en,j}$ to the wind speed prediction device 3.

Further, the beam transmitting and receiving unit 2 outputs the angle information indicating the elevation angle $\theta_n$ of each beam emitted to space to the wind speed prediction device 3.

The scattering signal acquiring unit 11 acquires each of the digital signals $s_{\theta n,j}(t)$ from the beam transmitting and receiving unit 2 (step ST1 in FIG. 6).

Further, the scattering signal acquiring unit 11 acquires the angle information indicating the elevation angle $\theta_n$ of each beam from the beam transmitting and receiving unit 2.

The scattering signal acquiring unit 11 outputs each of the digital signals $s_{\theta n,j}(t)$ and the angle information to the Doppler frequency calculating unit 12.

The Doppler frequency calculating unit 12 acquires each of the digital signals $s_{\theta n,j}(t)$ from the scattering signal acquiring unit 11, and acquires each angle information from the scattering signal acquiring unit 11.

Before FFT each of the digital signals $s_{\theta n,j}(t)$ in the hit direction, the Doppler frequency calculating unit 12 sets the FFT length $L_{\theta n}$ of each of the digital signals $s_{\theta n,j}(t)$ according to the elevation angle $\theta_n$ indicated by the angle information (step ST2 in FIG. 6). The FFT length $L_{\theta n}$ corresponds to a range bin width of the scattering signal.

That is, the Doppler frequency calculating unit 12 sets the FFT length $L_{\theta n}$ of the digital signal $s_{\theta n,j}(t)$ in such a way that the range bin width corresponding to the FFT length $L_{\theta n}$ is proportional to 1/sin ($\theta_n$).

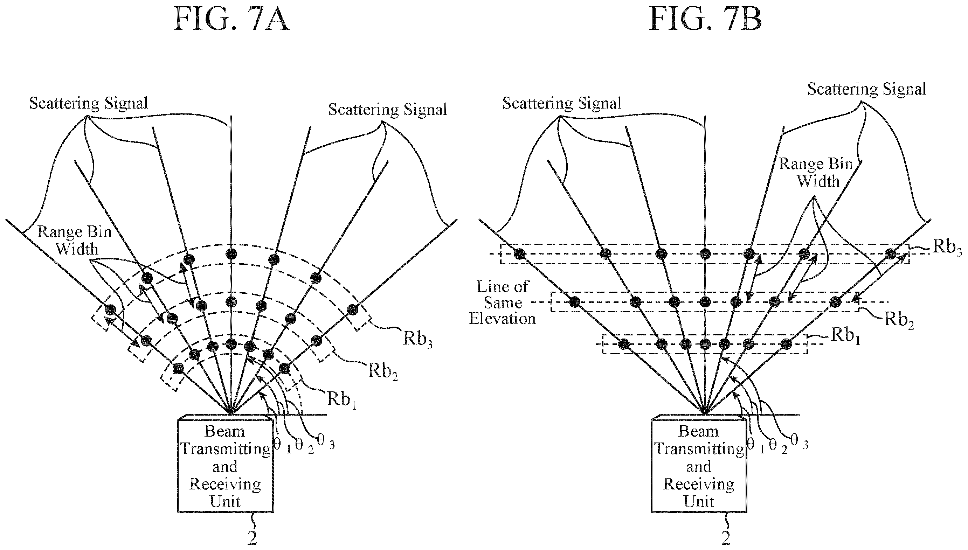

In a case where the FFT lengths $L_{\theta n}$ of the respective digital signals $s_{\theta n,j}(t)$ are the same, when the elevation angles $\theta_n$ are different, as illustrated in FIG. 7A, the altitudes of a plurality of observation points of the same range bin $Rb_m$ are different from each other.

On the other hand, in a case where the FFT lengths $L_{\theta n}$ of the respective digital signals $s_{\theta n,j}(t)$ are set according to the elevation angle $\theta_n$, as illustrated in FIG. 7B, the altitudes of the plurality of observation points of the same range bin $Rb_m$ are the same altitude even if the elevation angles $\theta_n$ are different.

In the radar device 1 illustrated in FIG. 1, the FFT length $L_{\theta n}$ is set shorter as the elevation angle $\theta_n$ is wider, and the FFT length $L_{\theta n}$ is set longer as the elevation angle $\theta_n$ of the scattering signal is narrower, so that a plurality of observation points in the same range bin $Rb_m$ have the same altitude.

FIG. 7 is an explanatory diagram illustrating an observation point of the Doppler frequency.

FIG. 7A is an explanatory diagram illustrating that the altitudes of a plurality of observation points of the same range bin $Rb_m$ are different from each other when the elevation angle $\theta_n$ is different.

FIG. 7B is an explanatory diagram illustrating that a plurality of observation points in the same range bin $Rb_m$ have the same altitude even when the elevation angle $\theta_n$ changes.

When the FFT length $L_{\theta n}$ is set to be short, the width of the range bin $Rb_m$ becomes narrow and the distance resolution becomes high. On the other hand, when the FFT length $L_{\theta n}$ is set to be long, the width of the range bin $Rb_m$ becomes wide and the distance resolution becomes low.

The Doppler frequency calculating unit 12 converts each digital signal $s_{\theta n,j}(t)$ into a frequency domain signal $r_{\theta n,j}(f)$ by performing FFT with an FFT length of $L_{\theta n}$ in the hit direction for each digital signal $s_{\theta n,j}(t)$ (step ST3 in FIG. 6).

The Doppler frequency calculating unit 12 calculates the respective Doppler frequencies $dpf_{\theta n,j,Rbm}$ in the plurality of range bins $Rb_1$ to $Rb_M$ from the signals $r_{\theta n,j}(f)$ in the frequency domain (step ST4 in FIG. 6).

The Doppler frequency calculating unit 12 outputs the Doppler frequencies $dpf_{\theta n,j,Rbm}$ of the respective range bins $Rb_m$ to the first wind speed distribution estimating unit 13.

Since the processing itself of calculating the Doppler frequencies $dpf_{\theta n,j,Rbm}$ of the range bin $Rb_m$ is a known technique, detailed description thereof will be omitted.

Note that calculation accuracy of the Doppler frequencies $dpf_{\theta n,j,Rbm}$ may be lowered due to a low signal to noise ratio (SNR) of the digital signal $s_{\theta n,j}(t)$. In such a case, the Doppler frequency calculating unit 12 may increase the calculation accuracy of the Doppler frequencies $dpf_{\theta n,j,Rbm}$, for example, by performing the following processing.

For example, the Doppler frequency calculating unit 12 acquires digital signals $s_{\theta n,j}(t)$ related to a plurality of pulsed beams having the same elevation angle $\theta_n$ and different hit numbers, and converts the digital signals $s_{\theta n,j}(t)$ related to the plurality of beams into frequency domain signals $r_{\theta n,j}(f)$. Then, the Doppler frequency calculating unit 12 coherently integrates the signals $r_{\theta n,j}(f)$ in the plurality of frequency domains to increase the calculation accuracy of the Doppler frequencies $dpf_{\theta n,j,Rbm}$. Since the processing itself for enhancing the calculation accuracy of the Doppler frequencies $dpf_{\theta n,j,Rbm}$ is a known technique, detailed description thereof will be omitted.

The first wind speed distribution estimating unit 13 acquires the Doppler frequencies $dpf_{\theta n,j,Rbm}$ of the respective range bins $Rb_m$ from the Doppler frequency calculating unit 12.

The first wind speed distribution estimating unit 13 estimates the wind speed distribution $u_{Rbm}(x, y)$ in the two-dimensional plane corresponding to each range bin $Rb_m$ from the plurality of Doppler frequencies $dpf_{\theta 1,j,Rbm}$ to $dpf_{\theta N,j,Rbm}$ in each range bin $Rb_m$ using the VVP method (step ST5 in FIG. 6).

Hereinafter, estimation processing of the wind speed distribution $u_{Rbm}(x, y)$ in the two-dimensional plane by the first wind speed distribution estimating unit 13 will be specifically described.

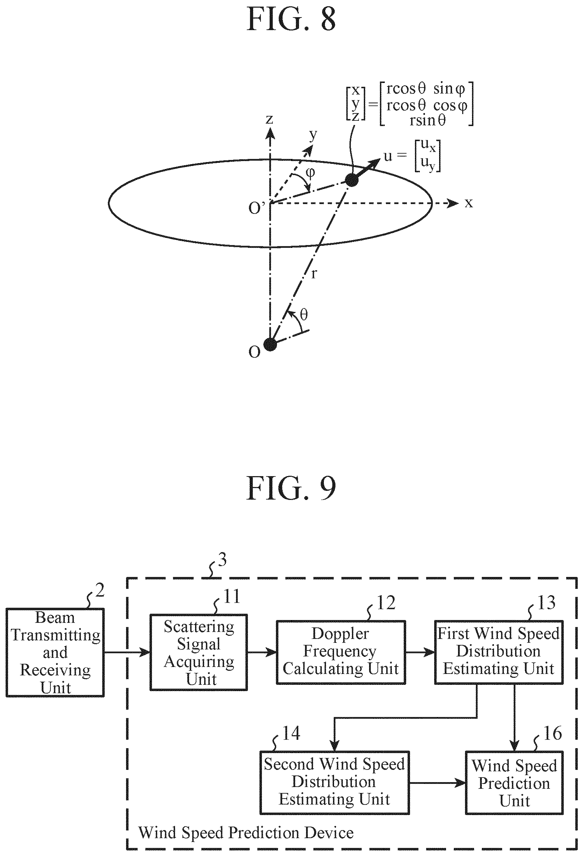

FIG. 8 is an explanatory diagram illustrating positions (x, y, z) of observation points of the wind speed.

The position (x, y, z) of the observation point of the wind speed is expressed by polar coordinates centered on the position O of the beam transmitting and receiving unit 2 included in the radar device 1 as expressed by the following Expression (1).

$$\begin{bmatrix} x \\ y \\ z \end{bmatrix} = \begin{bmatrix} r \cos \theta \sin \phi \\ r \cos \theta \cos \phi \\ r \sin \theta \end{bmatrix} \qquad (1)$$

In Expression (1), $\theta$ is the elevation angle of a beam. $\varphi$ is an angle formed by a line segment connecting the center point O' of the x-y plane where the observation point is present and the position (x, y, z) of the observation point and the y axis. r is a distance between the position O of the beam transmitting and receiving unit 2 and the position of the observation point (x, y, z).

For example, when the terrain of the ground surface vertically below the observation point is not a special terrain but a general terrain, there is no practical problem in observing the wind affecting the flying object as long as the wind speed prediction device 3 can observe the wind speed in a direction parallel to the two-dimensional plane even if the wind speed prediction device 3 cannot observe the wind speed in the vertical direction with respect to the two-dimensional plane where the observation point is present.

The general terrain corresponds to a flat terrain, an inclined terrain, a terrain having small irregularities, or the like. The special terrain corresponds to a terrain having a valley bottom, a terrain having a cliff with a large difference in elevation, or the like.

Accordingly, in the wind speed prediction device 3 illustrated in FIG. 3, the first wind speed distribution estimating unit 13 ignores the wind speed in the vertical direction, and a true wind speed vector u at the observation point is expressed as the following Expression (2).

$$\boldsymbol{u} = \begin{bmatrix} u_x \\ u_y \end{bmatrix} \qquad (2)$$

In Expression (2), $u_x$ represents a component in a direction parallel to the x-axis of the wind speed vector u, and $u_y$ represents a component in a direction parallel to the y-axis of the wind speed vector u.

The first wind speed distribution estimating unit 13 performs Taylor expansion of the wind speed vector u centered on the center point O' with respect to x and y on the assumption that the wind speed $u_0$ at the center point O' of the x-y plane is expressed as the following Expression (3). For example, when the third and subsequent terms are ignored, the following approximate Expression (4) holds.

$$\boldsymbol{u_0} = \begin{bmatrix} u_{x0}, & u_{y0} \end{bmatrix}^T \qquad (3)$$

$$\boldsymbol{u}(x, y) \simeq \boldsymbol{u_0} + \left( \frac{\partial \boldsymbol{u}}{\partial x} x + \frac{\partial \boldsymbol{u}}{\partial y} y \right) + \frac{1}{2} \left( \frac{\partial^2 \boldsymbol{u}}{\partial x^2} x^2 + 2 \frac{\partial^2 \boldsymbol{u}}{\partial x \partial y} xy + \frac{\partial^2 \boldsymbol{u}}{\partial y^2} y^2 \right) \qquad (4)$$

Since what is observed by the radar device 1 is the speed in the line-of-sight direction of the wind speed at the observation point, an observed wind speed $u_r(\theta, \varphi)$ is expressed as the following Expression (5).

$$\begin{aligned} u_r(\theta, \phi) &= \boldsymbol{u}(x, y) \cdot \left( \boldsymbol{i_x} \cos \theta \sin \phi + \boldsymbol{i_y} \cos \theta \cos \phi + \boldsymbol{i_z} \sin \theta \right) \\ &= \boldsymbol{a_{\theta,\phi}}^T \cdot \boldsymbol{p} \end{aligned} \qquad (5)$$

$$a_{\theta,\phi} = \begin{bmatrix} \cos\theta \sin\phi, \\ \cos\theta \cos\phi, \\ r\cos^2\theta \sin^2\phi, \\ r\cos^2\theta \sin\phi \cos\phi, \\ r\cos^2\theta \cos^2\phi, \\ r^2\cos^3\theta \sin^3\phi, \\ r^2\cos^3\theta \sin^2\phi \cos\phi, \\ r^2\cos^3\theta \sin\phi \cos^2\phi, \\ r^2\cos^3\theta \cos^3\phi \end{bmatrix} \qquad (6)$$

$$p = \begin{bmatrix} u_{x0}, \\ u_{y0}, \\ \dfrac{\partial u_x}{\partial x}, \\ \dfrac{\partial u_x}{\partial y} + \dfrac{\partial u_y}{\partial x}, \\ \dfrac{\partial u_y}{\partial y}, \\ \dfrac{\partial^2 u_x}{\partial x^2}, \\ \dfrac{\partial^2 u_x}{\partial x \partial y} + \dfrac{\partial^2 u_y}{\partial x^2}, \\ \dfrac{\partial^2 u_x}{\partial y^2} + \dfrac{\partial^2 u_y}{\partial x \partial y}, \\ \dfrac{\partial^2 u_y}{\partial y^2} \end{bmatrix} \qquad (7)$$

The first wind speed distribution estimating unit 13 acquires the observed wind speeds $u_r(\theta_1, \varphi_1)$ to $u_r(\theta_K, \varphi_K)$ of K beams, and substitutes the acquired observed wind speeds $u_r(\theta_1, \varphi_1)$ to $u_r(\theta_K, \varphi_K)$ into the following Expression (8) to estimate p illustrated in Expression (7). K is an integer of 2 or more. The K beams are K pieces of pulsed light in which sets of the elevation angle θ and the angle φ are different from each other.

$$\begin{bmatrix} u_r(\theta_1, \phi_1) \\ u_r(\theta_2, \phi_2) \\ \vdots \\ u_r(\theta_K, \phi_K) \end{bmatrix} = \begin{bmatrix} a_{\theta_1,\phi_1}^T \\ a_{\theta_2,\phi_2}^T \\ \vdots \\ a_{\theta_K,\phi_K}^T \end{bmatrix} p$$

$$\Rightarrow p \simeq \begin{bmatrix} a_{\theta_1,\phi_1}^T \\ a_{\theta_2,\phi_2}^T \\ \vdots \\ a_{\theta_K,\phi_K}^T \end{bmatrix}^{\dagger} \begin{bmatrix} u_r(\theta_1, \phi_1) \\ u_r(\theta_2, \phi_2) \\ \vdots \\ u_r(\theta_K, \phi_K) \end{bmatrix} \qquad (8)$$

A symbol "†" denotes pseudo-inverse matrix in Expression 8 In Expression (8), † is a symbol representing a pseudo-inverse matrix.

Among the elements of p illustrated in Expression (7), the fourth, seventh, and eighth elements from the top are expressed as the sum of two parameters, and thus are uncertain elements.

The first wind speed distribution estimating unit 13 determines the uncertain elements by equally allocating the parameter of the element of p estimated by Expression (8).

When the fourth element from the top among the elements of p is $p_4$, the first wind speed distribution estimating unit 13 determines $p_4$ as in the following Expression (9), for example.

When the seventh element from the top among the elements of p is $p_7$, the first wind speed distribution estimating unit 13 determines $p_7$ as in the following Expression (10), for example.

When the eighth element from the top among the elements of p is $p_8$, the first wind speed distribution estimating unit 13 determines $p_8$ as in the following Expression (11), for example.

$$\frac{\partial u_x}{\partial y} = \frac{\partial u_y}{\partial x} = \frac{1}{2} p_4 \qquad (9)$$

$$\frac{\partial^2 u_x}{\partial x \partial y} = \frac{\partial^2 u_y}{\partial x^2} = \frac{1}{2} p_7 \qquad (10)$$

$$\frac{\partial^2 u_x}{\partial y^2} = \frac{\partial^2 u_y}{\partial x \partial y} = \frac{1}{2} p_8 \qquad (11)$$

As described above, since all the coefficients $u_0$, $\partial u/\partial x$, $\partial u/\partial y$, $\partial^2 u/\partial x^2$, $\partial^2 u/\partial x \partial y$, and $\partial^2 u/\partial y^2$ illustrated in the approximate Expression (4) are determined, the first wind speed distribution estimating unit 13 can obtain the wind speed vector u(x, y) at each observation point from the approximate Expression (4).

When the wind speed vector u(x, y) at each observation point can be obtained, the first wind speed distribution estimating unit 13 can obtain the wind speed distribution $u_{Rbm}(x, y)$ in the two-dimensional plane corresponding to each range bin $Rb_m$.

Here, the first wind speed distribution estimating unit 13 approximates the Taylor expansion of the wind speed vector u(x, y) by 0th to 2nd order terms. However, this is merely an example, and the first wind speed distribution estimating unit 13 may approximate the Taylor expansion of the wind speed vector u(x, y) with terms of 0 degree to 3 degrees or more.

When M is 1, the first wind speed distribution estimating unit 13 outputs the wind speed distribution $u_{Rb1}(x, y)$ in the two-dimensional plane corresponding to the range bin $Rb_1$ to the wind speed prediction unit 15.

When M is 2 or more, the first wind speed distribution estimating unit 13 outputs the wind speed distribution $u_{Rbm}$ (x, y) in the two-dimensional plane corresponding to each range bin $Rb_m$ to the second wind speed distribution estimating unit 14.

The second wind speed distribution estimating unit 14 acquires the wind speed distribution $u_{Rbm}(x, y)$ in the two-dimensional plane corresponding to each range bin $Rb_m$ from the first wind speed distribution estimating unit 13.

The second wind speed distribution estimating unit 14 estimates a wind speed distribution $u_{Rbm'}(x, y)$ in a two-dimensional plane between the plurality of two-dimensional planes from the wind speed distributions $u_{Rb1}(x, y)$ to $u_{RbM}(x, y)$ in the plurality of two-dimensional planes (step ST6 in FIG. 6).

The second wind speed distribution estimating unit 14 outputs the wind speed distributions $u_{Rb1'}(x, y)$ to $u_{RbM-1'}(x, y)$ in the two-dimensional planes to the wind speed prediction unit 15.

Hereinafter, estimation processing of the wind speed distribution $u_{Rbm'}(x, y)$ in the two-dimensional plane by the second wind speed distribution estimating unit 14 will be specifically described.

For example, when estimating the wind speed distribution $u_{Rbm'}(x, y)$ in the two-dimensional plane between the two-dimensional plane in which the wind speed distribution is $u_{Rbm}(x, y)$ and a two-dimensional plane in which the wind speed distribution is $u_{Rbm+1}(x, y)$, the second wind speed distribution estimating unit 14 calculates the distance $L_{m-m'}$ in the vertical direction from the two-dimensional plane in which the wind speed distribution $u_{Rbm'}(x, y)$ is estimated to the two-dimensional plane in which the wind speed distribution is $u_{Rbm}(x, y)$.

Further, the second wind speed distribution estimating unit 14 calculates a distance $L_{(m+1)-m'}$ in the vertical direction from the two-dimensional plane in which the wind speed distribution $u_{Rbm'}(x, y)$ is estimated to the two-dimensional plane in which the wind speed distribution is $u_{Rbm+1}(x, y)$.

The second wind speed distribution estimating unit 14 calculates a weighting coefficient $w_m$ for the wind speed distribution $u_{Rbm}(x, y)$ in the two-dimensional plane and a weighting coefficient $w_{m+1}$ for the wind speed distribution $u_{Rbm+1}(x, y)$ in the two-dimensional plane on the basis of the distance $L_{m-m'}$ and the distance $L_{(m+1)-m'}$ as expressed in the following Expressions (12) to (14).

$$w_m = \frac{L - L_{m-m'}}{L} \qquad (12)$$

$$w_{m+1} = \frac{L - L_{(m+1)-m'}}{L} \qquad (13)$$

$$L_{m-m'} + L_{(m+1)-m'} = L \qquad (14)$$

The second wind speed distribution estimating unit 14 estimates the wind speed distribution $u_{Rbm'}(x, y)$ in the two-dimensional plane between the two-dimensional plane in which the wind speed distribution is $u_{Rbm}(x, y)$ and the two-dimensional plane in which the wind speed distribution is $u_{Rbm+1}(x, y)$ on the basis of the weighting coefficient $w_m$ and the weighting coefficient $w_{m+1}$ as expressed in the following Expression (15).

$$u_{Rbm'}(x, y) = \frac{w_m \times u_{Rbm}(x, y) + w_{m+1} \times u_{Rbm+1}(x, y)}{w_m + w_{m+1}} \qquad (15)$$

Here, the second wind speed distribution estimating unit 14 estimates the wind speed distribution $u_{Rbm'}(x, y)$ in the two-dimensional plane as a weighted average based on the distance from the two-dimensional plane in which the wind speed distribution $u_{Rbm'}(x, y)$ is estimated. However, this is merely an example, and for example, the second wind speed distribution estimating unit 14 compares the distance $L_{m-m'}$ with the distance $L_{(m+1)-m'}$. When the distance $L_{m-m'}$ is shorter than the distance $L_{(m+1)-m'}$, the second wind speed distribution estimating unit 14 may use the wind speed distribution $u_{Rbm}(x, y)$ in the two-dimensional plane as the wind speed distribution $u_{Rbm'}(x, y)$ in the two-dimensional plane, and when the distance $L_{m-m'}$ is equal to or longer than the distance $L_{(m+1)-m'}$, the second wind speed distribution estimating unit 14 may use the wind speed distribution $u_{Rbm+1}(x, y)$ in the two-dimensional plane as the wind speed distribution $u_{Rbm'}(x, y)$ in the two-dimensional plane.

Further, here, the second wind speed distribution estimating unit 14 estimates the wind speed distribution $u_{Rbm'}(x, y)$ in one two-dimensional plane as the wind speed distribution in the two-dimensional plane between the two-dimensional plane in which the wind speed distribution is $u_{Rbm}(x, y)$ and the two-dimensional plane in which the wind speed distribution is $u_{Rbm+1}(x, y)$. However, this is merely an example, and the second wind speed distribution estimating unit 14 may estimate wind speed distributions $u_{Rbm'}(x, y)$ of two or more two-dimensional planes having different positions in the vertical direction as the wind speed distribution in the two-dimensional plane between the two-dimensional plane in which the wind speed distribution is $u_{Rbm}(x, y)$ and the two-dimensional plane in which the wind speed distribution is $u_{Rbm+1}(x, y)$.

When M is 1, the wind speed prediction unit 15 acquires the wind speed distribution $u_{Rb1}(x, y)$ in the two-dimensional plane from the first wind speed distribution estimating unit 13.

When M is 2 or more, the wind speed prediction unit 15 acquires the wind speed distributions $u_{Rb1}(x, y)$ to $u_{RbM}(x, y)$ in the plurality of two-dimensional planes from the first wind speed distribution estimating unit 13, and acquires wind speed distributions $u_{Rb1'}(x, y)$ to $u_{RbM-1'}(x, y)$ in the two-dimensional plane from the second wind speed distribution estimating unit 14.

When M is 1, the wind speed prediction unit 15 predicts the wind speed u(t) in the observation region in the two-dimensional plane from the wind speed distribution $u_{Rb1}(x, y)$ in the two-dimensional plane using the two-dimensional N-S equation (step ST7 in FIG. 6).

When M is 2 or more, the wind speed prediction unit 15 selects the wind speed distribution in any two-dimensional plane from among the wind speed distributions $u_{Rb1}(x, y)$ to $u_{Rbm}(x, y)$ in the plurality of two-dimensional planes and the wind speed distributions $u_{Rb1'}(x, y)$ to $u_{RbM-1'}(x, y)$ in the two-dimensional planes.

When the observation point of the prediction target of the wind speed u(t) is present in the observation region in the two-dimensional plane corresponding to the range bin $Rb_m$, the wind speed prediction unit 15 selects the wind speed distribution $u_{Rbm}(x, y)$. When the observation point of the prediction target of the wind speed u(t) is present in the observation region in the two-dimensional plane corresponding to the range bin $Rb_{m'}$, the wind speed prediction unit 15 selects the wind speed distribution $u_{Rbm'}(x, y)$.

The wind speed prediction unit 15 predicts the wind speed u(t) in the observation region in the selected two-dimensional plane from the wind speed distribution in the selected two-dimensional plane using the two-dimensional N-S equation (step ST7 in FIG. 6).

Hereinafter, prediction processing of the wind speed u(t) performed by the wind speed prediction unit 15 will be specifically described.

Wind is generally considered an uncompressed fluid. The two-dimensional N-S equation regarding the uncompressed fluid is expressed by the following Expressions (16) and (17).

$$\frac{\partial u}{\partial t} = -(u \cdot \nabla)u + v\Delta u - \frac{1}{\rho}\nabla p + f \qquad\qquad (1\,6)$$

$$\nabla \cdot u = 0 \qquad\qquad (1\,7)$$

In Expression (16), u is a wind speed vector, v is a viscosity coefficient, ρ is a density, p is a pressure, f is an external force vector, and t is a time variable.

Since the viscosity coefficient v is very small, the viscosity of the wind can be ignored. In addition, the term of the external force vector F can also be ignored. Therefore, under the condition that each of the viscosity of the wind and the external force is absent, Expression (16) is expressed as the following Expression (18), and Expression (17) is expressed as the following Expression (19).

$$\frac{\partial u}{\partial t} = -(u \cdot \nabla)u - \frac{1}{\rho}\nabla p \qquad\qquad (1\,8)$$

$$\nabla \cdot u = 0 \qquad\qquad (1\,9)$$

The first term on the right side of Expression (18) is referred to as an advection term, and the second term on the right side is referred to as a pressure term.

When the wind speed vector u is a two-dimensional vector $u = [u_x, u_y]^T$, Expression (18) is expressed as the following Expressions (20) and (21).

$$\frac{\partial u_x}{\partial t} = -u_x\frac{\partial u_x}{\partial x} - u_y\frac{\partial u_x}{\partial y} - \frac{1}{\rho}\frac{\partial p}{\partial x} \qquad\qquad (2\,0)$$

$$\frac{\partial u_y}{\partial t} = -u_x\frac{\partial u_y}{\partial x} - u_y\frac{\partial u_y}{\partial y} - \frac{1}{\rho}\frac{\partial p}{\partial y} \qquad\qquad (2\,1)$$

$$\frac{\partial u_x}{\partial x} + \frac{\partial u_y}{\partial y} = 0 \qquad\qquad (2\,2)$$

When Expression (22) is used, Expression (20) is expressed as the following Expression (23), and Expression (21) is expressed as the following Expression (24).

$$\frac{\partial u_x}{\partial t} = -\frac{\partial u_x{}^2}{\partial x} - \frac{\partial u_x u_y}{\partial y} - \frac{1}{\rho}\frac{\partial p}{\partial x} \qquad\qquad (2\,3)$$

$$\frac{\partial u_y}{\partial t} = -\frac{\partial u_x u_y}{\partial x} - \frac{\partial u_y{}^2}{\partial y} - \frac{1}{\rho}\frac{\partial p}{\partial y} \qquad\qquad (2\,4)$$

When the wind speed vector u is discretized with respect to time by the difference method, Expression (23) is expressed as the following Expression (25), and Expression (24) is expressed as the following Expression (26).

$$\frac{u_x{}^{g+1} - u_x{}^g}{dt} = -\frac{\partial u_x{}^2}{\partial x} - \frac{\partial u_x u_y}{\partial y} - \frac{1}{\rho}\frac{\partial p}{\partial x} \qquad\qquad (2\,5)$$

$$\frac{u_y{}^{g+1} - u_y{}^{g}}{dt} = -\frac{\partial u_x u_y}{\partial x} - \frac{\partial u_y{}^2}{\partial y} - \frac{1}{\rho}\frac{\partial p}{\partial y} \qquad (26)$$

In the Expressions (25) and (26), g and g + 1 are symbols indicating time steps.

By using an intermediate variable $u_x{}^*$, Expression (25) can be divided into two Expressions as the following Expressions (27) and (28).

In addition, by using an intermediate variable $u_y{}^*$, Expression (26) can be divided into two Expressions as the following Expressions (29) and (30).

$$\frac{u_x{}^{*} - u_x{}^{g}}{dt} = -\frac{\partial u_x{}^2}{\partial x} - \frac{\partial u_x u_y}{\partial y} \qquad (27)$$

$$\frac{u_x{}^{g+1} - u_x{}^{*}}{dt} = -\frac{1}{\rho}\frac{\partial p}{\partial x} \qquad (28)$$

$$\frac{u_y{}^{*} - u_y{}^{g}}{dt} = -\frac{\partial u_x u_y}{\partial x} - \frac{\partial u_y{}^2}{\partial y} \qquad (29)$$

$$\frac{u_y{}^{g+1} - u_y{}^{*}}{dt} = -\frac{1}{\rho}\frac{\partial p}{\partial y} \qquad (30)$$

Expression (27) is transformed as Expression (31), and Expression (29) is transformed as Expression (32).

$$u_x{}^{*} = u_x{}^{g} - dt\left(\frac{\partial u_x{}^2}{\partial x} + \frac{\partial u_x u_y}{\partial y}\right) \qquad (31)$$

$$u_y{}^{*} = u_y{}^{g} - dt\left(\frac{\partial u_x u_y}{\partial x} + \frac{\partial u_y{}^2}{\partial y}\right) \qquad (32)$$

Expression (28) is expressed as Expression (33) below when differentiated in the x direction, and Expression (30) is expressed as Expression (34) below when differentiated in the y direction.

$$\frac{\dfrac{\partial u_x{}^{g+1}}{\partial x} - \dfrac{\partial u_x{}^{*}}{\partial x}}{dt} = -\frac{1}{\rho}\frac{\partial^2 p}{\partial x^2} \qquad (33)$$

$$\frac{\dfrac{\partial u_y{}^{g+1}}{\partial y} - \dfrac{\partial u_y{}^{*}}{\partial y}}{dt} = -\frac{1}{\rho}\frac{\partial^2 p}{\partial y^2} \qquad (34)$$

When the left sides of Expressions (33) and (34) are added to each other and the right sides of Expressions (33) and (34) are added to each other, the following Expression (35) is obtained. à

$$\frac{1}{dt}\left(\frac{\partial u_x{}^{g+1}}{\partial x} + \frac{\partial u_y{}^{g+1}}{\partial y} - \frac{\partial u_x{}^{*}}{\partial x} - \frac{\partial u_y{}^{*}}{\partial y}\right) = -\frac{1}{\rho}\left(\frac{\partial^2 p}{\partial x^2} + \frac{\partial^2 p}{\partial y^2}\right) \qquad (35)$$

According to Expression (22), $\nabla \cdot u^{g+1} = 0$ needs to be satisfied for the estimated wind speed vector u at the next time step g + 1. Therefore, the following Expression (36) is obtained as the Poisson's equation regarding pressure from Expression (35).

$$\frac{1}{\rho}\left(\frac{\partial^2 p}{\partial x^2} + \frac{\partial^2 p}{\partial y^2}\right) = \frac{1}{dt}\left(\frac{\partial u_x^*}{\partial x} + \frac{\partial u_y^*}{\partial y}\right) \qquad (36)$$

The wind speed prediction unit 15 discretizes the wind speed vector $u^g = [u_x{}^g, u_y{}^g]^T$ at the current time step g in the spatial direction.

The wind speed prediction unit 15 calculates the intermediate variable $u_x{}^*$ by substituting the discretized $u_x{}^g$ into Expression (31), and calculates the intermediate variable $u_y{}^*$ by substituting the discretized $u_y{}^g$ into Expression (32).

The wind speed prediction unit 15 calculates the pressure p from Expression (36) using the intermediate variable $u_x{}^*$ and the intermediate variable $u_y{}^*$.

The wind speed prediction unit 15 calculates a wind speed vector $u_x{}^{g+1}$ of the next time step g + 1 from Expression (28) using the intermediate variable $u_x{}^*$ and the pressure p.

The wind speed prediction unit 15 calculates a wind speed vector $u_y{}^{g+1}$ of the next time step g + 1 from Expression (30) using the intermediate variable $u_y{}^*$ and the pressure p.

The wind speed u(t) predicted by the wind speed prediction unit 15 is $[u_x{}^{g+1}, u_y{}^{g+1}]^T$, and the wind speed u(t) is displayed on, for example, a display (not illustrated).

A conventional wind speed prediction device performs a simulation using a weather model in order to predict a wind speed in an observation region, and the simulation using the weather model is three-dimensional calculation processing. For example, when the number of observation points in the three-dimensional observation region is Cx × Cy × Cz, and C = Cx = Cy = Cz, the calculation amount order is approximately proportional to $C^3$.

On the other hand, the calculation processing of the wind speed prediction device 3 illustrated in FIG. 3 is two-dimensional calculation processing. For example, when the number of two-dimensional planes is M, the number of observation points in the observation region present in the two-dimensional plane is Cx × Cy, and C = Cx = Cy, the calculation amount order is approximately proportional to $C^2 \times M$. When M = C, the calculation amount order of the wind speed prediction device 3 illustrated in FIG. 3 is substantially the same as the calculation amount order of the conventional wind speed prediction device.

However, it is assumed that three-dimensional calculation processing uses a three-dimensional N-S equation that does not ignore vertical wind. In the three-dimensional N-S equation, it is difficult to greatly expand the interval between the observation points in the vertical direction, and the maximum value of the interval between the observation points at which the three-dimensional N-S equation can be solved is determined as a Courant condition in the vertical direction.

On the other hand, in the two-dimensional N-S equation ignoring the vertical wind, which is the two-dimensional calculation processing, since there is no Courant condition in the vertical direction, it is possible to satisfy Cz >> M. For example, when (M/Cz) = 1/Q, the calculation amount order of the wind speed prediction device 3 illustrated in FIG. 3 is approximately 1/Q of the calculation amount order of the conventional wind speed prediction device. Q is a value of about 10 to 1000.

As described above, for example, when the terrain of the ground surface vertically below the observation point is not a special terrain but a general terrain, there is no practical problem in observing the wind affecting the flying object as long as the wind speed prediction device 3 can observe the wind speed in the direction parallel to the two-dimensional plane even if the wind speed prediction device 3 cannot observe the wind speed in the vertical direction with respect to the two-dimensional plane where the observation point is present.

Even if the terrain of the ground surface vertically below the observation point is a special terrain, the wind speed in the direction parallel to the two-dimensional plane can be used as useful information for observing the wind affecting the flying object.

In a first embodiment described above, the wind speed prediction device 3 includes the scattering signal acquiring unit 11 to acquire a scattering signal that is each of a plurality of beams after being emitted to space and scattered in the space, the beams having mutually different elevation angles, which are angles formed by a line-of-sight direction and a horizontal direction, the Doppler frequency calculating unit 12 to set a range bin width as distance resolution of each of scattering signals acquired by the scattering signal acquiring unit 11 according to an elevation angle of each of the beams emitted to space, and calculate a Doppler frequency of a range bin corresponding to a two-dimensional plane including an observation region from the each of the scattering signals, the first wind speed distribution estimating unit 13 to estimate a wind speed distribution in the two-dimensional plane from a plurality of Doppler frequencies calculated by the Doppler frequency calculating unit 12 using a VVP method, and the wind speed prediction unit 15 to predict a wind speed in the observation region from the wind speed distribution in the two-dimensional plane estimated by the first wind speed distribution estimating unit 13 using a two-dimensional Navier-Stokes equation. Therefore, the wind speed prediction device 3 can predict the wind speed without performing three-dimensional calculation processing.

In the wind speed prediction device 3 illustrated in FIG. 3, the first wind speed distribution estimating unit 13 estimates the wind speed distribution $u_{Rbm}(x, y)$ in the two-dimensional plane corresponding to each range bin $Rb_m$. However, the wind speed distribution $u_{Rbm}(x, y)$ estimated by the first wind speed distribution estimating unit 13 may slightly deviate from the actual wind speed distribution due to the influence of observation noise. The first wind speed distribution estimating unit 13 may smooth the wind speed distribution $u_{Rbm}(x, y)$ in the time direction in order to suppress the deviation due to the influence of the observation noise.

The smoothing of the wind speed distribution $u_{Rbm}(x, y)$ in the time direction can be implemented by fusing a fluid movement model such as a two-dimensional N-S equation and the estimated wind speed distribution $u_{Rbm}(x, y)$. The fusion of the fluid movement model and the wind speed distribution $u_{Rbm}(x, y)$ is called data assimilation.

For example, it is assumed that the true wind speed distribution $u_{Rbm}(x, y)$ at the previous time step g-1 is represented by $u_{t=tg-1}$, and the true wind speed distribution $u_{Rbm}(x, y)$ at the current time step g is represented by $u_{t=tg}$. The two-dimensional N-S equation is a fluid model that can nonlinearly describe the relationship between $u_{t=tg-1}$ and $u_{t=tg}$, and if a nonlinear function is represented by $f(\cdot)$, the following Expression (37) holds.

$$\boldsymbol{u}_{t=t_n} = f\left(\boldsymbol{u}_{t=t_{n-1}}\right) \qquad (37)$$

The data assimilation processing is processing performed using a data assimilation function $As(\cdot)$ as expressed in the following Expression (38). That is, the data assimilation processing calculates a smoothed $u(x, y; {}_{t=tg})$ bar of the current time step g by adding $u(x, y; {}_{t=tg})$ which is the wind speed distribution $u_{Rbm}(x, y)$ of the current time step g and $f(u(x, y; {}_{t=tg-1})$ bar) obtained by time-developing the wind speed distribution $u_{Rbm}(x, y)$ of the previous time step g-1 to the current time step g. In the text of the specification, since it is not possible to attach a symbol "-" above a character due to the electronic application, for example, it is written as a $u(x, y; {}_{t=tg})$ bar.

$$\overline{u\left(x, y; t = t_g\right)} = As\left(\boldsymbol{u}\left(x, y; t = t_g\right),\ f\left(\overline{\boldsymbol{u}\left(x, y; t = t_{g-1}\right)}\right)\right) \qquad (38)$$

Here, the first wind speed distribution estimating unit 13 performs the data assimilation processing using the data assimilation function $As(\cdot)$. However, this is merely an example, and the first wind speed distribution estimating unit 13 may perform the data assimilation processing by, for example, a particle filter using a two-dimensional N-S equation or an ensemble Kalman filter using the two-dimensional N-S equation. In addition, the first wind speed distribution estimating unit 13 may perform the data assimilation processing by an extended Kalman filter in which the two-dimensional N-S equation is approximated to a linear function or a variational method using the two-dimensional N-S equation.

Second Embodiment

In the wind speed prediction device 3 according to the first embodiment, the wind speed prediction unit 15 selects the wind speed distribution in any two-dimensional plane from among the wind speed distributions $u_{Rb1}(x, y)$ to $u_{RbM}(x, y)$ in the plurality of two-dimensional planes and the wind speed distributions $u_{Rb1'}(x, y)$ to $u_{RbM-1'}(x, y)$ in the two-dimensional planes.

In a second embodiment, a wind speed prediction device 3 including a wind speed prediction unit 16 will be described, the wind speed prediction unit 16 estimating a wind speed distribution in a two-dimensional plane including a flight area in which a flying object is scheduled to fly as an observation region from the wind speed distributions $u_{Rb1}(x, y)$ to $u_{Rbm}(x, y)$ in the plurality of two-dimensional planes and the wind speed distributions $u_{Rb1'}(x, y)$ to $u_{RbM-1'}(x, y)$ in the two-dimensional planes.

FIG. 9 is a configuration diagram illustrating the wind speed prediction device 3 according to the second embodiment. In FIG. 9, the same reference numerals as those in FIG. 3 denote the same or corresponding parts, and thus description thereof is omitted.

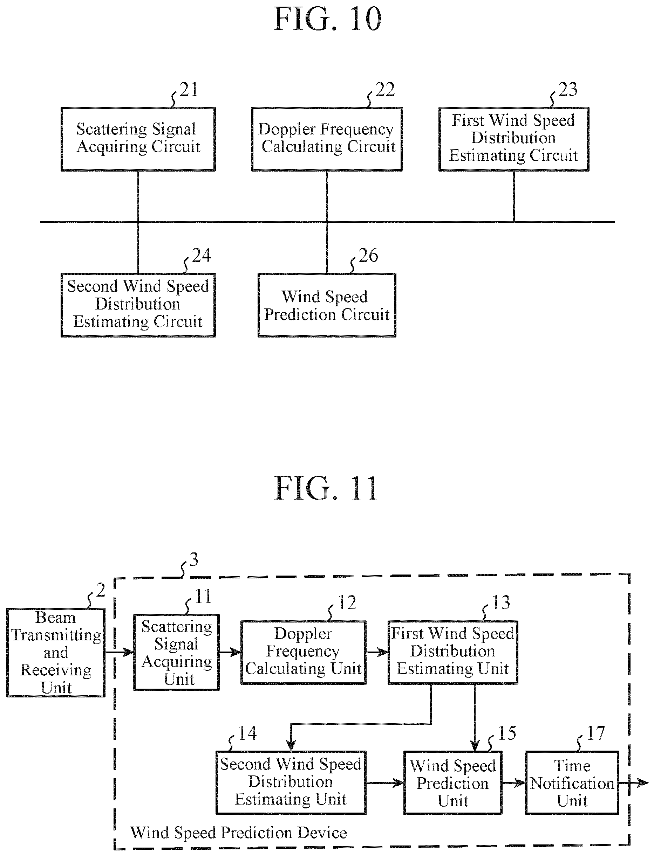

FIG. 10 is a hardware configuration diagram illustrating hardware of the wind speed prediction device 3 according to the second embodiment. In FIG. 10, the same reference numerals as those in FIG. 4 denote the same or corresponding parts, and thus description thereof is omitted.

The wind speed prediction device 3 illustrated in FIG. 9 includes a scattering signal acquiring unit 11, a Doppler frequency calculating unit 12, a first wind speed distribution estimating unit 13, a second wind speed distribution estimating unit 14, and the wind speed prediction unit 16.

The wind speed prediction unit 16 is implemented by, for example, a wind speed prediction circuit 26 illustrated in FIG. 10.

The wind speed prediction unit 16 estimates a wind speed distribution in a two-dimensional plane including a flight area as an observation region from the wind speed distributions $u_{Rb1}(x, y)$ to $u_{RbM}(x, y)$ in the plurality of two-dimensional planes estimated by the first wind speed distribution estimating unit 13 and the wind speed distributions $u_{Rb1'}(x, y)$ to $u_{RbM-1'}(x, y)$ in the two-dimensional plane estimated by the second wind speed distribution estimating unit 14.

The wind speed prediction unit 16 predicts the wind speed $u(t)$ in the flight area from the estimated wind speed distribution in the two-dimensional plane using the two-dimensional N-S equation.

In FIG. 9, it is assumed that each of the scattering signal acquiring unit 11, the Doppler frequency calculating unit 12, the first wind speed distribution estimating unit 13, the second wind speed distribution estimating unit 14, and the wind speed prediction unit 16, which are components of the wind speed prediction device 3, is implemented by dedicated hardware as illustrated in FIG. 10. That is, it is assumed that the wind speed prediction device 3 is implemented by the scattering signal acquiring circuit 21, the Doppler frequency calculating circuit 22, the first wind speed distribution estimating circuit 23, the second wind speed distribution estimating circuit 24, and the wind speed prediction circuit 26.

Each of the scattering signal acquiring circuit 21, the Doppler frequency calculating circuit 22, the first wind speed distribution estimating circuit 23, the second wind speed distribution estimating circuit 24, and the wind speed prediction circuit 26 corresponds to, for example, a single circuit, a composite circuit, a programmed processor, a parallel-programmed processor, ASIC, FPGA, or a combination thereof.

The components of the wind speed prediction device 3 are not limited to those implemented by dedicated hardware, and the wind speed prediction device 3 may be implemented by software, firmware, or a combination of software and firmware.

In a case where the wind speed prediction device 3 is implemented by software, firmware, or the like, a program for causing a computer to execute each processing procedure in the scattering signal acquiring unit 11, the Doppler frequency calculating unit 12, the first wind speed distribution estimating unit 13, the second wind speed distribution estimating unit 14, and the wind speed prediction unit 16 is stored in the memory 31 illustrated in FIG. 5. Then, the processor 32 illustrated in FIG. 5 executes the program stored in the memory 31.

Further, FIG. 10 illustrates an example in which each of the components of the wind speed prediction device 3 is implemented by dedicated hardware, and FIG. 5 illustrates an example in which the wind speed prediction device 3 is implemented by software, firmware, or the like. However, this is merely an example, and some components in the wind speed prediction device 3 may be implemented by dedicated hardware, and the remaining components may be implemented by software, firmware, or the like.

Next, the operation of the wind speed prediction device 3 illustrated in FIG. 9 will be described. The wind speed prediction device 3 is similar to the wind speed prediction device 3 illustrated in FIG. 3 except for the wind speed prediction unit 16, and thus only the operation of the wind speed prediction unit 16 will be described here.

Here, for convenience of description, it is assumed that the flight area is present in a two-dimensional plane between a two-dimensional plane in which the wind speed distribution is $u_{Rbm}(x, y)$ and a two-dimensional plane in which the wind speed distribution is $u_{Rbm'}(x, y)$.

The wind speed prediction unit 16 calculates a distance $L_{p-m}$ in the vertical direction from the two-dimensional plane in which the flight area is present to the two-dimensional plane in which the wind speed distribution is $u_{Rbm}(x, y)$.

Further, the wind speed prediction unit 16 calculates a distance $L_{p-m'}$ in the vertical direction from the two-dimensional plane in which the flight area is present to the two-dimensional plane in which the wind speed distribution is $u_{Rbm'}(x, y)$.

The wind speed prediction unit 16 calculates a weighting coefficient $w_{p-m}$ for the wind speed distribution $u_{Rbm}(x, y)$ in the two-dimensional plane and a weighting coefficient $w_{p-m'}$ for the wind speed distribution $u_{Rbm'}(x, y)$ in the two-dimensional plane on the basis of the distance $L_{p-m}$ and the distance $L_{p-m'}$ as expressed in the following Expressions (39) to (41).

$$w_{p-m} = \frac{L' - L_{p-m}}{L'} \qquad (39)$$

$$w_{p-m'} = \frac{L' - L_{p-m'}}{L'} \qquad (40)$$

$$L_{p-m} + L_{p-m'} = L' \qquad (41)$$

The wind speed prediction unit 16 estimates the wind speed distribution $u_{Rbp}(x, y)$ of the two-dimensional plane where the flight area is present on the basis of the weighting coefficient $w_{p-m}$ and the weighting coefficient $w_{p-m'}$ as expressed in the following Expression (42).

$$u_{Rbp}(x, y) = \frac{w_{p-m} \times u_{Rbm}(x, y) + w_{p-m\prime} \times u_{Rbm\prime}(x, y)}{w_{p-m} + w_{p-m\prime}} \qquad (4\,2)$$

The wind speed prediction unit 16 predicts the wind speed u(t) in the flight area from the estimated wind speed distribution $u_{Rbp}$(x, y) in the two-dimensional plane using the two-dimensional N-S equation. The prediction processing of the wind speed u(t) performed by the wind speed prediction unit 16 is similar to the prediction processing of the wind speed u(t) performed by the wind speed prediction unit 15 illustrated in FIG. 3.

Third Embodiment

In a third embodiment, a wind speed prediction device 3 including a time notification unit 17 that calculates a time t at which the wind speed u(t) predicted by the wind speed prediction unit 15 becomes equal to or higher than the threshold Th and gives a notification of the time t will be described.

FIG. 11 is a configuration diagram illustrating the wind speed prediction device 3 according to the third embodiment. In FIG. 11, the same reference numerals as those in FIGS. 3 and 9 denote the same or corresponding parts, and thus description thereof is omitted.

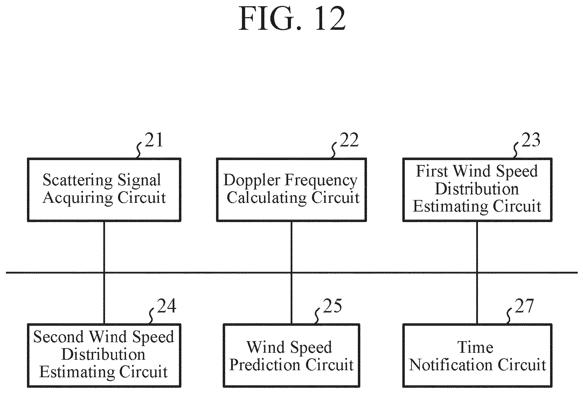

FIG. 12 is a hardware configuration diagram illustrating hardware of the wind speed prediction device 3 according to the third embodiment. In FIG. 12, the same reference numerals as those in FIGS. 4 and 10 denote the same or corresponding parts, and thus description thereof is omitted.

The wind speed prediction device 3 illustrated in FIG. 11 includes a scattering signal acquiring unit 11, a Doppler frequency calculating unit 12, a first wind speed distribution estimating unit 13, a second wind speed distribution estimating unit 14, the wind speed prediction unit 15, and the time notification unit 17.

The time notification unit 17 is implemented by, for example, a time notification circuit 27 illustrated in FIG. 12.

The time notification unit 17 specifies the time t at which the wind speed u(t) predicted by the wind speed prediction unit 15 becomes equal to or higher than the threshold Th.

The time notification unit 17 gives a notification of the specified time t to, for example, a flying object or a control tower monitoring a flight state of the flying object.

FIG. 11 illustrates an example in which the time notification unit 17 is applied to the wind speed prediction device 3 illustrated in FIG. 3. However, this is merely an example, and the time notification unit 17 may be applied to the wind speed prediction device 3 illustrated in FIG. 9.

In FIG. 11, it is assumed that each of the scattering signal acquiring unit 11, the Doppler frequency calculating unit 12, the first wind speed distribution estimating unit 13, the second wind speed distribution estimating unit 14, the wind speed prediction unit 15, and the time notification unit 17, which are components of the wind speed prediction device 3, is implemented by dedicated hardware as illustrated in FIG. 12. That is, it is assumed that the wind speed prediction device 3 is implemented by the scattering signal acquiring circuit 21, the Doppler frequency calculating circuit 22, the first wind speed distribution estimating circuit 23, the second wind speed distribution estimating circuit 24, the wind speed prediction circuit 25, and the time notification circuit 27.

Each of the scattering signal acquiring circuit 21, the Doppler frequency calculating circuit 22, the first wind speed distribution estimating circuit 23, the second wind speed distribution estimating circuit 24, the wind speed prediction circuit 25, and the time notification circuit 27 corresponds to, for example, a single circuit, a composite circuit, a programmed processor, a parallel-programmed processor, ASIC, FPGA, or a combination thereof.

The components of the wind speed prediction device 3 are not limited to those implemented by dedicated hardware, and the wind speed prediction device 3 may be implemented by software, firmware, or a combination of software and firmware.

In a case where the wind speed prediction device 3 is implemented by software, firmware, or the like, a program for causing a computer to execute each processing procedure in the scattering signal acquiring unit 11, the Doppler frequency calculating unit 12, the first wind speed distribution estimating unit 13, the second wind speed distribution estimating unit 14, the wind speed prediction unit 15, and the time notification unit 17 is stored in the memory 31 illustrated in FIG. 5. Then, the processor 32 illustrated in FIG. 5 executes the program stored in the memory 31.

Further, FIG. 12 illustrates an example in which each of the components of the wind speed prediction device 3 is implemented by dedicated hardware, and FIG. 5 illustrates an example in which the wind speed prediction device 3 is implemented by software, firmware, or the like. However, this is merely an example, and some components in the wind speed prediction device 3 may be implemented by dedicated hardware, and the remaining components may be implemented by software, firmware, or the like.

Next, the operation of the wind speed prediction device 3 illustrated in FIG. 11 will be described. The wind speed prediction device 3 is similar to the wind speed prediction device 3 illustrated in FIG. 3 except for the time notification unit 17, and thus only the operation of the time notification unit 17 will be described here.

The time notification unit 17 acquires the predicted wind speed u(t) from the wind speed prediction unit 15 every time the wind speed prediction unit 15 predicts the wind speed u(t).

Every time the predicted wind speed u(t) is acquired, the time notification unit 17 compares the wind speed u(t) with the threshold Th. The threshold Th is, for example, a lower limit value of the wind speed that may affect the flight of the flying object. The threshold Th may be stored in the internal memory of the time notification unit 17 or may be given from the outside.

The time notification unit 17 specifies the time t at which the wind speed u(t) is equal to or higher than the threshold Th on the basis of the comparison result between the wind speed u(t) and the threshold Th.

The time notification unit 17 gives a notification of the specified time t to, for example, a flying object or a control tower monitoring a flight state of the flying object.

In the third embodiment described above, the wind speed prediction device 3 illustrated in FIG. 11 includes the time notification unit 17 that specifies the time at which the wind speed predicted by the wind speed prediction unit 15 becomes equal to or higher than the threshold and gives a notification of the specified time t. Therefore, the wind speed prediction device 3 illustrated in FIG. 11 can predict the wind speed without performing three-dimensional calculation processing, as does the wind speed prediction device 3 illustrated in FIG. 3. In addition, it is possible to notify the time when wind that may affect the flight of the flying object blows.

INDUSTRIAL APPLICABILITY

The present disclosure is suitable for a wind speed prediction device, a wind speed prediction method, and a radar device.

REFERENCE SIGNS LIST

1: radar device, 2: beam transmitting and receiving unit, 3: wind speed prediction device, 11: scattering signal acquiring unit, 12: Doppler frequency calculating unit, 13: first wind speed distribution estimating unit, 14: second wind speed distribution estimating unit, 15, 16: wind speed prediction unit, 17: time notification unit, 21: scattering signal acquiring circuit, 22: doppler frequency calculating circuit, 23: first wind speed distribution estimating circuit, 24: second wind speed distribution estimating circuit, 25, 26: wind speed prediction circuit, 27: time notification circuit, 31: memory, 32: processor

**Claims**

1. A wind speed prediction device (3), comprising:

   a scattering signal acquiring unit (11) to acquire a scattering signal that is each of a plurality of beams after being emitted to space and scattered in the space, the beams having mutually different elevation angles, which are angles formed by a line-of-sight direction and a horizontal direction;
   a Doppler frequency calculating unit (12) to set a range bin width as distance resolution of each of scattering signals acquired by the scattering signal acquiring unit (11) according to an elevation angle of each of the beams emitted to the space to enable monitoring of observation points of same range bins, the range bins being at the same altitude even for the plurality of beams at different elevation angles, and calculate a Doppler frequency of a range bin corresponding to a two-dimensional plane including an observation region from the each of the scattering signals;
   a first wind speed distribution estimating unit (13) to estimate a wind speed distribution in the two-dimensional plane from the plurality of Doppler frequencies calculated by the Doppler frequency calculating unit (12); and
   a wind speed prediction unit (15, 16) to predict a wind speed in the observation region from the wind speed distribution in the two-dimensional plane estimated by the first wind speed distribution estimating unit (13);
   **characterised in that**;
   the first wind speed distribution estimating unit (13) is configured to estimate the wind speed distribution in the two-dimensional plane using a volume velocity processing (VVP) method; and
   the wind speed predication unit (15, 16) is configured to predict the wind speed in the observation region using a two-dimensional Navier-Stokes equation.

2. The wind speed prediction device according to claim 1, wherein a plurality of range bins is provided, and

the Doppler frequency calculating unit (12) is configured to calculate each of the Doppler frequencies in the plurality of range bins from the each of the scattering signals to express a three-dimensional region to be observed as a stack of a plurality of two-dimensional planes, and

the first wind speed distribution estimating unit (13) is configured to estimate a wind speed distribution in each of the two-dimensional planes having a different altitude corresponding to each of the range bins corresponding to the two-dimensional planes having different altitudes using the VVP method from the plurality of the Doppler frequencies in each of the range bins calculated by the Doppler frequency calculating unit (12).

3. The wind speed prediction device according to claim 2, further comprising:

a second wind speed distribution estimating unit (14) to estimate a wind speed distribution in a two-dimensional plane between two adjacent two-dimensional planes, selected from the plurality of two-dimensional planes, from the wind speed distributions in said two-dimensional planes having different altitudes estimated by the first wind speed distribution estimating unit (13), and to estimate a two-dimensional wind speed distribution having a designated altitude by linearly interpolating the wind speed distribution in the two-dimensional plane in an altitude direction, wherein

the wind speed prediction unit (15,16) is configured to select the wind speed distribution in the two-dimensional plane including a flight area in which a flying object is scheduled to fly from among the wind speed distributions in the plurality of two-dimensional planes having different altitudes estimated by the first wind speed distribution estimating unit (13) and the second wind speed distribution estimating unit (14), and predict the wind speed in the flight area at which the flying object is scheduled to fly, from the selected wind speed distribution using a two-dimensional Navier-Stokes equation.

4. The wind speed prediction device according to claim 2, further comprising:

a second wind speed distribution estimating unit (14) to estimate the wind speed distribution in a two-dimensional plane between two adjacent two-dimensional planes, selected from the plurality of two-dimensional planes, from the wind speed distributions in said two adjacent two-dimensional planes having different altitudes estimated by the first wind speed distribution estimating unit (13), and estimate a two-dimensional wind speed distribution having a designated altitude by linearly interpolating the wind speed distribution in the two-dimensional plane in an altitude direction, wherein

the wind speed prediction unit (16) is configured to estimate the wind speed distribution in the two-dimensional plane at a flight altitude at which a flying object is scheduled to fly using the second wind speed distribution estimating unit, and predict a wind speed in the flight area at which the flying object is scheduled to fly, from the estimated wind speed distribution using a two-dimensional Navier-Stokes equation.

5. The wind speed prediction device according to claim 1, further comprising a time notification unit (17) to specify a time at which the wind speed predicted by the wind speed prediction unit (15, 16) is equal to or higher than a threshold and gives a notification of the time.

6. A wind speed prediction method comprising, when each of a plurality of beams having mutually different elevation angles, which are angles formed by a line-of-sight direction and a horizontal direction, is emitted to space:

acquiring, by a scattering signal acquiring unit (11), a scattering signal that is each of the beams after being scattered in the space;

setting, by a Doppler frequency calculating unit (12), a range bin width as distance resolution of each of scattering signals acquired by the scattering signal acquiring unit (11) according to an elevation angle of each of the beams emitted to the space to enable monitoring of observation points of same range bins, the range bins being at the same altitude even for the plurality of beams at different elevation angles;

calculating, by the Doppler frequency calculating unit (12), a Doppler frequency of a range bin corresponding to a two-dimensional plane including an observation region from the each of the scattering signals;

estimating, by a first wind speed distribution estimating unit (13), a wind speed distribution in the two-dimensional plane from a plurality of Doppler frequencies calculated by the Doppler frequency calculating unit (12); and

predicting, by a wind speed prediction unit (15, 16), a wind speed in the observation region from the wind speed distribution in the two-dimensional plane estimated by the first wind speed distribution estimating unit (13);

**characterised in that**;

the first wind speed distribution estimating unit (13) estimates the wind speed distribution in the two-dimensional plane using a volume velocity processing (VVP) method; and

the wind speed predication unit (15, 16) predicts the wind speed in the observation region using a two-dimensional Navier-Stokes equation.

**Patentansprüche**

1. Windgeschwindigkeitsvorhersagevorrichtung (3), die Folgendes umfasst:

   eine Streusignalerfassungseinheit (11) zum Erfassen eines Streusignals, das jeder aus einer Vielzahl von Strahlen ist, nachdem sie in den Raum emittiert und im Raum gestreut wurden, wobei die Strahlen voneinander unterschiedliche Höhenwinkel aufweisen, die Winkel sind, welche durch eine Sichtlinienrichtung und eine horizontale Richtung gebildet sind;
   eine Dopplerfrequenzberechnungseinheit (12) zum Einstellen einer Entfernungszellenbreite als Entfernungsauflösung von jedem von Streusignalen, die von der Streusignalerfassungseinheit (11) gemäß einem Höhenwinkel von jedem der in den Raum emittierten Strahlen erfasst werden, um ein Überwachen von Beobachtungspunkten von gleichen Entfernungszellen zu ermöglichen, wobei die Entfernungszellen auch für die Vielzahl von Strahlen mit unterschiedlichen Höhenwinkeln auf derselben Höhe liegen, und zum Berechnen einer Dopplerfrequenz einer Entfernungszelle, die einer zweidimensionalen Ebene entspricht, welche eine Beobachtungsregion umfasst, anhand jedes der Streusignale;
   eine erste Windgeschwindigkeitsverteilungsschätzungseinheit (13) zum Schätzen einer Windgeschwindigkeitsverteilung in der zweidimensionalen Ebene anhand der Vielzahl von Dopplerfrequenzen, die von der Dopplerfrequenzberechnungseinheit (12) berechnet wurden;
   eine erste Windgeschwindigkeitsvorhersageeinheit (15, 16) zum Vorhersagen einer Windgeschwindigkeit in der Beobachtungsregion anhand der Windgeschwindigkeitsverteilung in der zweidimensionalen Ebene, die von der ersten Windgeschwindigkeitsverteilungsschätzungseinheit (13) geschätzt wurde;
   **dadurch gekennzeichnet, dass**:

   die erste Windgeschwindigkeitsverteilungseinheit (13) dazu ausgelegt ist, die Windgeschwindigkeitsverteilung in der zweidimensionalen Ebene unter Verwendung eines Volumengeschwindigkeitsverarbeitungs-(VVP-)Verfahrens zu schätzen; und dass
   die Windgeschwindigkeitsvorhersageeinheit (15, 16) dazu ausgelegt ist, die Windgeschwindigkeit in der Beobachtungsregion unter Verwendung einer zweidimensionalen Navier-Stokes-Gleichung vorherzusagen.

2. Windgeschwindigkeitsvorhersagevorrichtung nach Anspruch 1, wobei eine Vielzahl von Entfernungszellen bereitgestellt ist und wobei

   die Dopplerfrequenzberechnungseinheit (12) dazu ausgelegt ist, jede der Dopplerfrequenzen in der Vielzahl von Entfernungszellen anhand jedes der Streusignale zu berechnen, um eine zu beobachtende dreidimensionale Region als Stapel einer Vielzahl von zweidimensionalen Ebenen auszudrücken, und wobei
   die erste Windgeschwindigkeitsschätzungseinheit (13) dazu ausgelegt ist, in jeder der zweidimensionalen Ebenen mit unterschiedlicher Höhe, die jeder der Entfernungszellen entspricht, die den zweidimensionalen Ebenen mit unterschiedlichen Höhen entsprechen, unter Verwendung des VVP-Verfahrens anhand der Vielzahl von durch die Dopplerfrequenzberechnungseinheit (12) berechneten Dopplerfrequenzen in jeder der Entfernungszellen eine Windgeschwindigkeitsverteilung zu schätzen.

3. Windgeschwindigkeitsvorhersagevorrichtung nach Anspruch 2, die ferner Folgendes umfasst:

   eine zweite Windgeschwindigkeitsverteilungsschätzungseinheit (14) zum Schätzen einer Windgeschwindigkeitsverteilung in einer zweidimensionalen Ebene zwischen zwei benachbarten zweidimensionalen Ebenen, ausgewählt aus der Vielzahl von zweidimensionalen Ebenen, anhand der Windgeschwindigkeitsverteilungen in den zweidimensionalen Ebenen mit unterschiedlicher Höhe, die von der ersten Windgeschwindigkeitsverteilungseinheit (13) geschätzt wurden, und zum Schätzen einer zweidimensionalen Windgeschwindigkeitsverteilung mit einer bestimmten Höhe durch lineares Interpolieren der Windgeschwindigkeitsverteilung in der zweidimensionalen Ebene in einer Höhenrichtung, wobei
   die Windgeschwindigkeitsvorhersageeinheit (15, 16) ausgelegt ist zum Auswählen der Windgeschwindigkeitsverteilung in der zweidimensionalen Ebene, die einen Flugbereich umfasst, in dem das Fliegen eines fliegenden Objekts geplant ist, aus den Windgeschwindigkeitsverteilungen in der Vielzahl von zweidimensionalen Ebenen mit unterschiedlicher Höhe, die durch die erste Windgeschwindigkeitsverteilungsschätzungseinheit (13) und die zweite Windgeschwindigkeitsverteilungsschätzungseinheit (14) geschätzt wurden, und zum Vorhersagen der Windgeschwindigkeit im Flugbereich, in dem das Fliegen des fliegenden Objekts geplant ist, anhand der ausgewählten Windgeschwindigkeitsverteilung unter Verwendung einer zweidimensionalen Navier-Stokes-Gleichung.

4. Windgeschwindigkeitsvorhersagevorrichtung nach Anspruch 2, die ferner Folgendes umfasst:

eine zweite Windgeschwindigkeitsverteilungsschätzungseinheit (14) zum Schätzen der Windgeschwindigkeitsverteilung in einer zweidimensionalen Ebene zwischen zwei benachbarten zweidimensionalen Ebenen, ausgewählt aus der Vielzahl von zweidimensionalen Ebenen, anhand der Windgeschwindigkeitsverteilungen in den zwei benachbarten zweidimensionalen Ebenen mit unterschiedlicher Höhe, die von der ersten Windgeschwindigkeitsverteilungseinheit (13) geschätzt wurden, und zum Schätzen einer zweidimensionalen Windgeschwindigkeitsverteilung mit einer bestimmten Höhe durch lineares Interpolieren der Windgeschwindigkeitsverteilung in der zweidimensionalen Ebene in einer Höhenrichtung, wobei
die Windgeschwindigkeitsvorhersageeinheit (16) ausgelegt ist zum Schätzen der Windgeschwindigkeitsverteilung in der zweidimensionalen Ebene in einer Flughöhe, in der das Fliegen eines fliegenden Objekts geplant ist, unter Verwendung der zweiten Windgeschwindigkeitsverteilungsschätzungseinheit und zum Vorhersagen der Windgeschwindigkeit im Flugbereich, in dem das Fliegen des fliegenden Objekts geplant ist, anhand der geschätzten Windgeschwindigkeitsverteilung unter Verwendung einer zweidimensionalen Navier-Stokes-Gleichung.

5. Windgeschwindigkeitsvorhersagevorrichtung nach Anspruch 1, ferner umfassend eine Zeitmeldeeinheit (17) zum Spezifizieren einer Zeit, zu der die von der Windgeschwindigkeitsvorhersageeinheit (15, 16) größer oder gleich einer Schwelle ist, und Ausgeben einer Meldung über die Zeit.

6. Windgeschwindigkeitsvorhersageverfahren, das, wenn jeder aus einer Vielzahl von Strahlen mit voneinander unterschiedlichen Höhenwinkeln, die Winkel sind, welche durch eine Sichtlinienrichtung und eine horizontale Richtung gebildet sind, in den Raum emittiert wird, Folgendes umfasst:

Erfassen eines Streusignals durch eine Streusignalerfassungseinheit (11), das jeder der Strahlen ist, nachdem sie im Raum gestreut wurden;
Einstellen einer Entfernungszellenbreite als Entfernungsauflösung von jedem aus Streusignalen, die von der Streusignalerfassungseinheit (11) gemäß einem Höhenwinkel von jedem der in den Raum emittierten Strahlen durch eine Dopplerfrequenzberechnungseinheit (12), um ein Überwachen von Beobachtungspunkten von gleichen Entfernungszellen zu ermöglichen, wobei die Entfernungszellen auch für die Vielzahl von Strahlen mit unterschiedlichen Höhenwinkeln auf der gleichen Höhe liegen;
Berechnen einer Dopplerfrequenz einer Entfernungszelle, die einer zweidimensionalen Ebene entspricht, welche eine Beobachtungsregion umfasst, anhand jedes der Streusignale durch die Dopplerfrequenzberechnungseinheit (12);
Schätzen einer Windgeschwindigkeitsverteilung in der zweidimensionalen Ebene anhand einer Vielzahl von Dopplerfrequenzen, die von der Dopplerfrequenzberechnungseinheit (12) berechnet wurden, durch eine erste Windgeschwindigkeitsverteilungsschätzungseinheit (13);
Vorhersagen einer Windgeschwindigkeit in der Beobachtungsregion anhand der Windgeschwindigkeitsverteilung in der zweidimensionalen Ebene, die von der ersten Windgeschwindigkeitsverteilungsschätzungseinheit (13) geschätzt wurde, durch eine Windgeschwindigkeitsvorhersageeinheit (15, 16);
**dadurch gekennzeichnet, dass**:

die erste Windgeschwindigkeitsverteilungseinheit (13) die Windgeschwindigkeitsverteilung in der zweidimensionalen Ebene unter Verwendung eines Volumengeschwindigkeitsverarbeitungs-(VVP-)Verfahrens schätzt; und dass
die Windgeschwindigkeitsvorhersageeinheit (15, 16) die Windgeschwindigkeit in der Beobachtungsregion unter Verwendung einer zweidimensionalen Navier-Stokes-Gleichung vorhersagt.

**Revendications**

1. Dispositif de prédiction de vitesse de vent (3), comprenant :

une unité d'acquisition de signal de diffusion (11) pour acquérir un signal de diffusion qui est chacun d'une pluralité de faisceaux après avoir été émis dans un espace et dispersés dans l'espace, les faisceaux présentant des angles d'élévation mutuellement différents, qui sont des angles formés par une direction de ligne de visée et une direction horizontale ;

une unité de calcul de fréquence Doppler (12) pour définir une largeur de cellule de portée en tant que résolution de distance de chacun des signaux de diffusion acquis par l'unité d'acquisition de signal de diffusion (11) selon un angle d'élévation de chacun des faisceaux émis vers l'espace pour permettre une surveillance de points d'observation de mêmes cellules de portée, les cellules de portée étant à la même altitude même pour la pluralité de faisceaux à des angles d'élévation différents, et calculer une fréquence Doppler d'une cellule de portée correspondant à un plan bidimensionnel incluant une région d'observation à partir de chacun des signaux de diffusion ;

une première unité d'estimation de distribution de vitesse de vent (13) pour estimer une distribution de vitesse de vent dans le plan bidimensionnel à partir de la pluralité de fréquences Doppler calculées par l'unité de calcul de fréquence Doppler (12) ; et

une unité de prédiction de vitesse de vent (15, 16) pour prédire une vitesse de vent dans la région d'observation à partir de la distribution de vitesse de vent dans le plan bidimensionnel estimée par la première unité d'estimation de distribution de vitesse de vent (13) ;

**caractérisé en ce que** :

la première unité d'estimation de distribution de vitesse de vent (13) est configurée pour estimer la distribution de vitesse de vent dans le plan bidimensionnel en utilisant un procédé de traitement de vitesse volumique (VVP) ; et

l'unité de prédiction de vitesse de vent (15, 16) est configurée pour prédire la vitesse de vent dans la région d'observation en utilisant une équation de Navier-Stokes bidimensionnelle.

2. Dispositif de prédiction de vitesse de vent selon la revendication **1,** dans lequel une pluralité de cellules de portée est prévue, et

l'unité de calcul de fréquence Doppler (12) est configurée pour calculer chacune des fréquences Doppler dans la pluralité de cellules de portée à partir de chacun des signaux de diffusion pour exprimer une région tridimensionnelle à observer sous la forme d'un empilement d'une pluralité de plans bidimensionnels, et

la première unité d'estimation de distribution de vitesse de vent (13) est configurée pour estimer une distribution de vitesse de vent dans chacun des plans bidimensionnels présentant une altitude différente correspondant à chacune des cellules de portée correspondant aux plans bidimensionnels présentant des altitudes différentes en utilisant le procédé VVP à partir de la pluralité des fréquences Doppler dans chacune des cellules de portée calculées par l'unité de calcul de fréquence Doppler (12).

3. Dispositif de prévision de vitesse de vent selon la revendication **2,** comprenant en outre :

une seconde unité d'estimation de distribution de vitesse de vent (14) pour estimer une distribution de vitesse de vent dans un plan bidimensionnel entre deux plans bidimensionnels adjacents, sélectionnés parmi la pluralité de plans bidimensionnels, à partir des distributions de vitesse de vent dans lesdits plans bidimensionnels présentant des altitudes différentes estimées par la première unité d'estimation de distribution de vitesse de vent (13), et pour estimer une distribution de vitesse de vent bidimensionnelle présentant une altitude désignée en interpolant linéairement la distribution de vitesse de vent dans le plan bidimensionnel dans une direction d'altitude, dans lequel

l'unité de prédiction de vitesse de vent (15, 16) est configurée pour sélectionner la distribution de vitesse de vent dans le plan bidimensionnel incluant une zone de vol dans laquelle un objet volant est programmé pour voler parmi les distributions de vitesse de vent dans la pluralité de plans bidimensionnels présentant des altitudes différentes estimées par la première unité d'estimation de distribution de vitesse de vent (13) et la seconde unité d'estimation de distribution de vitesse de vent (14), et pour prédire la vitesse de vent dans la zone de vol au niveau de laquelle l'objet volant est programmé pour voler, à partir de la distribution de vitesse de vent sélectionnée en utilisant une équation de Navier-Stokes bidimensionnelle.

4. Dispositif de prévision de vitesse de vent selon la revendication **2,** comprenant en outre :

une seconde unité d'estimation de distribution de vitesse de vent (14) pour estimer la distribution de vitesse de vent dans un plan bidimensionnel entre deux plans bidimensionnels adjacents, sélectionnés parmi la pluralité de plans bidimensionnels, à partir des distributions de vitesse de vent dans lesdits deux plans bidimensionnels adjacents présentant des altitudes différentes estimées par la première unité d'estimation de distribution de vitesse de vent (13), et estimer une distribution de vitesse de vent bidimensionnelle présentant une altitude désignée en interpolant linéairement la distribution de vitesse de vent dans le plan bidimensionnel dans une direction d'altitude, dans lequel

l'unité de prédiction de vitesse de vent (16) est configurée pour estimer la distribution de vitesse de vent dans le plan bidimensionnel à une altitude de vol à laquelle un objet volant est programmé pour voler en utilisant la seconde unité d'estimation de distribution de vitesse de vent, et prédire une vitesse de vent dans la zone de vol au niveau de laquelle l'objet volant est programmé pour voler, à partir de la distribution de vitesse de vent estimée en utilisant une équation de Navier-Stokes bidimensionnelle.

5. Dispositif de prédiction de vitesse de vent selon la revendication 1, comprenant en outre une unité de notification d'heure (17) pour spécifier une heure à laquelle la vitesse de vent prédite par l'unité de prédiction de vitesse de vent (15, 16) est égale ou supérieure à un seuil et donne une notification de l'heure.

6. Procédé de prédiction de vitesse de vent comprenant les étapes consistant **à,** lorsque chacun d'une pluralité de faisceaux présentant des angles d'élévation mutuellement différents, qui sont des angles formés par une direction de ligne de visée et une direction horizontale, est émis vers l'espace :

acquérir, par l'intermédiaire d'une unité d'acquisition de signal de diffusion (11), des signaux de diffusion qui est chacun des faisceaux après diffusion dans l'espace ;

définir, par l'intermédiaire d'une unité de calcul de fréquence Doppler (12), une largeur de cellule de portée en tant que résolution de distance de chacun des signaux de diffusion acquis par l'unité d'acquisition de signal de diffusion (11) selon un angle d'élévation de chacun des faisceaux émis vers l'espace pour permettre une surveillance de points d'observation de mêmes cellules de portée, les cellules de portée étant à la même altitude même pour la pluralité de faisceaux à des angles d'élévation différents ;

calculer, par l'intermédiaire de l'unité de calcul de fréquence Doppler (12), une fréquence Doppler d'une case de portée correspondant à un plan bidimensionnel incluant une région d'observation à partir de chacun des signaux de diffusion ;

estimer, par l'intermédiaire d'une première unité d'estimation de distribution de vitesse de vent (13), une distribution de vitesse de vent dans le plan bidimensionnel à partir d'une pluralité de fréquences Doppler calculées par l'unité de calcul de fréquence Doppler (12) ; et

prédire, par l'intermédiaire d'une unité de prédiction de vitesse de vent (15, 16), une vitesse de vent dans la région d'observation à partir de la distribution de vitesse de vent dans le plan bidimensionnel estimée par la première unité d'estimation de distribution de vitesse de vent (13) ;

**caractérisé en ce que** :

la première unité d'estimation de distribution de vitesse de vent (13) estime la distribution de vitesse de vent dans le plan bidimensionnel en utilisant un procédé de traitement de vitesse volumique (VVP) ; et

l'unité de prédiction de vitesse de vent (15, 16) prédit la vitesse de vent dans la région d'observation en utilisant une équation de Navier-Stokes bidimensionnelle.

# FIG. 1

Beam Transmitting and Receiving Unit — 2

Wind Speed Prediction Device — 3

Radar Device — 1

# FIG. 2A

Flight Area

j = 1    j = 2    j = 3

j = 4

Beam                                    Beam

Line-of-Sight                          Line-of-Sight
Direction                              Direction

$\theta_3$
$\theta_2$
$\theta_1$

Horizontal        Beam
Direction         Transmitting
                  and
                  Receiving
                  Unit

2

# FIG. 2B

Flight Area

j = 2
j = 1    j = 5    j = 9    j = 6    j = 10    j = 11    j = 7    j = 3

j = 12
j = 8
j = 4

Beam

Beam

Line-of-Sight                          Line-of-Sight
Direction                              Direction

$\theta_6$
$\theta_5$    $\theta_3$    $\theta_1$
$\theta_4$    $\theta_2$

Horizontal        Beam
Direction         Transmitting
                  and
                  Receiving
                  Unit

2

EP 4 343 385 B1

# FIG. 3

# FIG. 4

# FIG. 5

| Memory ⌐31 | Processor ⌐32 |

# FIG. 6

START

Scattering Signal Acquiring Unit
Acquires Each of Digital Signals — ST1

Doppler Frequency Calculating Unit
Sets FFT Length of Each of
Digital Signals — ST2

Doppler Frequency Calculating Unit
Converts Each of Digital Signals into
Frequency Domain Signal — ST3

Doppler Frequency Calculating Unit
Calculates Respective Doppler Frequencies in
Plurality of Range Bins — ST4

First Wind Speed Distribution Estimating Unit
Estimates Wind Speed Distribution in
Two-Dimensional Plane Corresponding to
Each Range Bin — ST5

Second Wind Speed Distribution Estimating Unit
Estimates Wind Speed Distribution of
Two-Dimensional Plane between Plurality of
Two-Dimensional Planes — ST6

Wind Speed Predicting Unit
Predicts Wind Speed in Observation Region — ST7

END

## FIG. 7A

Scattering Signal

Scattering Signal

Range Bin Width

$Rb_3$

$Rb_2$

$Rb_1$

Beam Transmitting and Receiving Unit

$\theta_1$ $\theta_2$ $\theta_3$

2

## FIG. 7B

Scattering Signal

Scattering Signal

Range Bin Width

$Rb_3$

$Rb_2$

$Rb_1$

Line of Same Elevation

Beam Transmitting and Receiving Unit

$\theta_1$ $\theta_2$ $\theta_3$

2

EP 4 343 385 B1

# FIG. 8

$$\begin{bmatrix} x \\ y \\ z \end{bmatrix} = \begin{bmatrix} r\cos\theta\ \sin\varphi \\ r\cos\theta\ \cos\varphi \\ r\sin\theta \end{bmatrix}$$

$$u = \begin{bmatrix} u_x \\ u_y \end{bmatrix}$$

# FIG. 9

| Beam Transmitting and Receiving Unit | Scattering Signal Acquiring Unit | Doppler Frequency Calculating Unit | First Wind Speed Distribution Estimating Unit |

Second Wind Speed Distribution Estimating Unit

Wind Speed Prediction Unit

Wind Speed Prediction Device

FIG. 10

| 21 | 22 | 23 |
|---|---|---|
| Scattering Signal Acquiring Circuit | Doppler Frequency Calculating Circuit | First Wind Speed Distribution Estimating Circuit |

| 24 | 26 |
|---|---|
| Second Wind Speed Distribution Estimating Circuit | Wind Speed Prediction Circuit |

FIG. 11

Beam Transmitting and Receiving Unit — 2

Wind Speed Prediction Device — 3

Scattering Signal Acquiring Unit — 11

Doppler Frequency Calculating Unit — 12

First Wind Speed Distribution Estimating Unit — 13

Second Wind Speed Distribution Estimating Unit — 14

Wind Speed Prediction Unit — 15

Time Notification Unit — 17

FIG. 12

```
           ⌐21                      ⌐22                      ⌐23
┌──────────────────┐    ┌──────────────────┐    ┌──────────────────┐
│                  │    │                  │    │  First Wind Speed │
│ Scattering Signal│    │ Doppler Frequency│    │   Distribution    │
│ Acquiring Circuit│    │ Calculating Circuit│   │Estimating Circuit │
│                  │    │                  │    │                  │
└────────┬─────────┘    └─────────┬────────┘    └─────────┬────────┘
         │                        │                       │
─────────┼────────────────────────┼───────────────────────┼─────────
         │                        │                       │
           ⌐24                      ⌐25                      ⌐27
┌────────┴─────────┐    ┌─────────┴────────┐    ┌─────────┴────────┐
│ Second Wind Speed│    │                  │    │                  │
│   Distribution   │    │   Wind Speed     │    │      Time        │
│Estimating Circuit│    │ Prediction Circuit│   │Notification Circuit│
└──────────────────┘    └──────────────────┘    └──────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014202190 A
- US 2013282285 A1
- US 5724125 A

### Non-patent literature cited in the description

- **WALDTEUFEL PET**. On the Analysis of Single-Doppler Radar Data. *Journal of Applied Meteorology and Climatology*, 01 April 1979, 5382-542, https://doi.org/

- **SOICHIRO SUGIMOTO et al.** A rainfall prediction method using a meteorological radar: Estimation of horizontal wind and its divergence fields using Doppler radar data. *Report of the Central Research Institute of the Electric Power Industry (Report of the Central Research Institute of the Electric Power Industry)*, 01 April 2001, 1-29